# EUROPEAN PATENT APPLICATION

(11) **EP 4 694 356 A1**
(43) Date of publication of application: **11.02.2026**
(21) Application number: 24779680.8
(22) Date of filing: 18.03.2024
(51) Int. Cl.: H04W 40/34, H04B 10/112, H04W 40/12, H04W 92/20

(54) **CONTROL APPARATUS, PROGRAM, AND SYSTEM**

(30) Priority: 30.03.2023 JP 2023055600
(71) Applicant: Softbank Corp., Tokyo 105-7529 (JP)
(72) Inventor: MAEKAWA Naoki, Tokyo 105-7529 (JP); INAI Makoto, Tokyo 105-7529 (JP); IMAMURA Toshio, Tokyo 105-7529 (JP); KITAMURA Toshihide, Tokyo 105-7529 (JP); TANAKA Tomoya, Tokyo 105-7529 (JP)
(74) Representative: Dilg, Haeusler, Schindelmann Patentanwaltsgesellschaft mbH
(86) International application number: PCT/JP2024/010601
(87) International publication number: WO 2024/203555

(57) **Abstract**

Provided is a control apparatus including a weather forecast data acquisition unit which acquires, with regard to each of a plurality of wireless devices installed on a ground, weather forecast data which forecasts weather between one wireless device among the plurality of wireless devices and a wireless device with which optical wireless communication connection can be established by the one wireless device among the plurality of wireless devices, a communication related information reception unit which receives communication related information in connection with communication of a wireless device from each of the plurality of wireless devices, a switching determination unit which determines, based on the weather forecast data between the one wireless device and a wireless device with which the one wireless device establishes optical wireless communication connection among the plurality of wireless devices, whether or not a connection destination of optical wireless communication connection of the one wireless device is to be switched, a connection destination selection unit which selects, in response to the switching determination unit having determined that the connection destination of optical wireless communication connection of the one wireless device is to be switched, based on the weather forecast data and the communication related information of each of the plurality of wireless devices, a connection destination of optical wireless communication connection of the one wireless device.

## Description

### TECHNICAL FIELD

The present invention relates to a control apparatus, a program, and a system.

### BACKGROUND ART

Patent document 1 describes a HAPS (High Altitude Platform Station) which provides a wireless communication service to a terminal by establishing a feeder link with a gateway mounted to a movable body, establishing a service link with a terminal on the ground, and relaying communication between the gateway and the terminal.

### RELATED ART DOCUMENTS

### PATENT DOCUMENTS

Patent Document 1: Japanese Patent No. 7129538

### GENERAL DISCLOSURE

According to an embodiment of the present invention, a control apparatus is provided. The control apparatus may include a weather forecast data acquisition unit which acquires, with regard to each of a plurality of wireless devices installed on a ground, weather forecast data which forecasts weather between one wireless device among the plurality of wireless devices and a wireless device with which optical wireless communication connection can be established by the one wireless device among the plurality of wireless devices. The control apparatus may include a communication related information reception unit which receives communication related information in connection with communication of a wireless device from each of the plurality of wireless devices. The control apparatus may include a switching determination unit which determines, based on the weather forecast data between the one wireless device and a wireless device with which the one wireless device establishes optical wireless communication connection among the plurality of wireless devices, whether or not a connection destination of optical wireless communication connection of the one wireless device is to be switched. The control apparatus may include a connection destination selection unit which selects, in response to the switching determination unit having determined that the connection destination of optical wireless communication connection of the one wireless device is to be switched, based on the weather forecast data and the communication related information of each of the plurality of wireless devices, a connection destination of optical wireless communication connection of the one wireless device and a connection destination of optical wireless communication connection of another wireless device which requires switching of a connection destination of optical wireless communication connection among the plurality of wireless devices. The control apparatus may include a wireless device control unit which causes, based on a selection result of the connection destination selection unit, the plurality of wireless devices to switch a connection destination of optical wireless communication connection.

In the control apparatus, the wireless device with which optical wireless communication connection can be established by the one wireless device may include a plurality of wireless devices, and the connection destination selection unit may select, as the connection destination of optical wireless communication connection of the one wireless device, a wireless device in which the weather forecast data between the wireless device and the one wireless device meets a predetermined good weather condition among the plurality of wireless devices with which optical wireless communication connection can be established by the one wireless device.

In any of the control apparatuses, the communication related information reception unit may receive the communication related information including running rate information representing a running rate that is a ratio of a period during which a wireless device normally runs in a predetermined period, and when the wireless device in which the weather forecast data meets the good weather condition includes a plurality of wireless devices, the connection destination selection unit may select, as the connection destination of optical wireless communication connection of the one wireless device, a wireless device in which the running rate is highest among the plurality of wireless devices in which the weather forecast data meets the good weather condition.

In any of the control apparatuses, the communication related information reception unit may receive the communication related information including available bandwidth information which represents a bandwidth available for a wireless device in optical wireless communication, and when the wireless device in which the weather forecast data meets the good weather condition includes a plurality of wireless devices, the connection destination selection unit may select, as the connection destination of optical wireless communication connection of the one wireless device, a wireless device with a widest bandwidth available among the plurality of wireless devices in which the weather forecast data meets the good weather condition. In any of the control apparatuses, the communication related information reception unit may receive, from each of the plurality of wireless devices, the communication related information including operation rate information representing an operation rate that is a ratio of a period during which a wireless device operates in a predetermined period, the connection destination selection unit may select, as the connection destination of optical wireless communication connection of the one wireless device, a wireless device in which the weather forecast data between the wireless device and the one wireless device meets a predetermined good weather condition among the plurality of wireless devices with which optical wireless communication connection can be established by the one wireless device, and when the wireless device in which the weather forecast data meets the good weather condition includes a plurality of wireless devices, the connection destination selection unit may select, as the connection destination of optical wireless communication connection of the one wireless device, a wireless device in which the operation rate is lowest among the plurality of wireless devices in which the weather forecast data meets the good weather condition. Any of the control apparatuses may further include an information storage unit which stores performance information representing performance of the wireless device which includes transmitter maximum output power information representing maximum output power of a transmitter mounted to a wireless device, the connection destination selection unit may select, as the connection destination of optical wireless communication connection of the one wireless device, a wireless device in which the weather forecast data between the wireless device and the one wireless device meets a predetermined good weather condition among the plurality of wireless devices with which optical wireless communication connection can be established by the one wireless device, and when the wireless device in which the weather forecast data meets the good weather condition includes a plurality of wireless devices, the connection destination selection unit may select, as the connection destination of optical wireless communication connection of the one wireless device, a wireless device with a highest maximum output power of the transmitter mounted to the wireless device among the plurality of wireless devices in which the weather forecast data meets the good weather condition.

In any of the control apparatuses, the wireless device control unit may cause the one wireless device, a connection destination of optical wireless communication connection of which is to be switched, to establish radio communication connection between the one wireless device and a wireless device with which radio communication connection can be established by the one wireless device among the plurality of wireless devices. In any of the control apparatuses, the communication related information reception unit may receive the communication related information of the one wireless device which includes allocated bandwidth information representing a bandwidth allocated, before a connection destination of optical wireless communication connection is switched, to communication between the one wireless device and a wireless device serving as the connection destination of optical wireless communication connection of the one wireless device, and receive the communication related information of the one wireless device which includes allocated bandwidth information representing a bandwidth allocated, after a connection destination of optical wireless communication connection is switched, to communication between the one wireless device and a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the bandwidth allocated to communication between the one wireless device after a connection destination of optical wireless communication connection is switched and the wireless device serving as the connection destination of optical wireless communication connection of the one wireless device is narrower than a predetermined bandwidth threshold as compared to the bandwidth allocated to communication between the one wireless device before a connection destination of optical wireless communication connection is switched and the wireless device serving as the connection destination of optical wireless communication connection of the one wireless device. In any of the control apparatuses, the communication related information reception unit may receive the communication related information of the one wireless device which includes received signal strength indicator information representing a received signal strength indicator of a signal, before a connection destination of optical wireless communication connection is switched, received by the one wireless device from a wireless device serving as the connection destination of optical wireless communication connection of the one wireless device, and receive the communication related information of the one wireless device which includes received signal strength indicator information representing a received signal strength indicator of a signal received, after a connection destination of optical wireless communication connection is switched, by the one wireless device from a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the received signal strength indicator of the signal received, by the one wireless device after a connection destination of optical wireless communication connection is switched, from the wireless device serving as the connection destination of optical wireless communication connection of the one wireless device is lower than a predetermined received signal strength indicator threshold as compared to the received signal strength indicator of a signal received, by the one wireless device before a connection destination of optical wireless communication connection is switched, from the wireless device serving as the connection destination of optical wireless communication connection of the one wireless device. In any of the control apparatuses, the communication related information reception unit may receive the communication related information of the one wireless device which includes delay information representing a delay of communication, before a connection destination of optical wireless communication connection is switched, between the one wireless device and a wireless device serving as the connection destination of optical wireless communication connection of the one wireless device, and receive the communication related information of the one wireless device which includes delay information representing, after a connection destination of optical wireless communication connection is switched, a delay of communication between the one wireless device and a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the delay of communication between the one wireless device after a connection destination of optical wireless communication connection is switched and the wireless device serving as the connection destination of optical wireless communication connection of the one wireless device is longer than a predetermined delay threshold as compared to the delay of communication between the one wireless device before a connection destination of optical wireless communication connection is switched and the wireless device serving as the connection destination of optical wireless communication connection of the one wireless device. In any of the control apparatuses, the communication related information reception unit may receive the communication related information of the one wireless device which includes jitter information representing a jitter, before a connection destination of optical wireless communication connection is switched, that is a variation in delay per unit time of communication between the one wireless device and a wireless device serving as the connection destination of optical wireless communication connection of the one wireless device, and receive the communication related information of the one wireless device which includes jitter information representing a jitter, after a connection destination of optical wireless communication connection is switched, that is a variation in delay per unit time of communication between the one wireless device and a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the jitter of communication between the one wireless device after a connection destination of optical wireless communication connection is switched and the wireless device serving as the connection destination of optical wireless communication connection of the one wireless device is greater than a predetermined jitter threshold as compared to the jitter of communication between the one wireless device before a connection destination of optical wireless communication connection is switched and the wireless device serving as the connection destination of optical wireless communication connection of the one wireless device. In any of the control apparatuses, the communication related information reception unit may receive the communication related information of the one wireless device which includes false rate information representing a false rate, before a connection destination of optical wireless communication connection is switched, that is a ratio of false data among data received by the one wireless device from a wireless device serving as the connection destination of optical wireless communication connection of the one wireless device, and receive the communication related information of the one wireless device which includes false rate information representing a false rate, after a connection destination of optical wireless communication connection is switched, that is a ratio of false data among data received by the one wireless device from a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the false rate of data received, by the one wireless device after a connection destination of optical wireless communication connection is switched, from the wireless device serving as the connection destination of optical wireless communication connection of the one wireless device is higher than a predetermined false rate threshold as compared to the false rate of data received by the one wireless device before a connection destination of optical wireless communication connection is switched from the wireless device serving as the connection destination of optical wireless communication connection of the one wireless device. In any of the control apparatuses, the communication related information reception unit may receive the communication related information of the one wireless device which includes packet loss rate information representing a packet loss rate, before a connection destination of optical wireless communication connection is switched, that is a ratio of lost packets among packets transmitted by the one wireless device to a wireless device serving as the connection destination of optical wireless communication connection of the one wireless device, and receive the communication related information of the one wireless device which includes packet loss rate information representing a packet loss rate, after a connection destination of optical wireless communication connection is switched, that is a ratio of lost packets among packets transmitted by the one wireless device to a wireless device serving as the connection destination of optical wireless communication connection of the one wireless device, the control apparatus may further comprise an establishment determination unit which determines whether or not the one wireless device is caused to establish radio communication connection based on the communication related information of the one wireless device before a connection destination of optical wireless communication connection is switched and the communication related information of the one wireless device after a connection destination of optical wireless communication connection is switched, in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device, and the establishment determination unit may determine that the one wireless device is caused to establish radio communication connection when the packet loss rate of packets transmitted by the one wireless device after a connection destination of optical wireless communication connection is switched to the wireless device serving as the connection destination of optical wireless communication connection of the one wireless device is higher than a predetermined packet loss rate threshold as compared to the packet loss rate of packets transmitted by the one wireless device before a connection destination of optical wireless communication connection is switched to the wireless device serving as the connection destination of optical wireless communication connection of the one wireless device.

In any of the control apparatuses, the communication related information reception unit may further receive the communication related information of the one wireless device after a connection destination of optical wireless communication connection is switched, the control apparatus may further comprise an establishment determination unit which determines whether or not the one wireless device is caused to establish radio communication connection based on the communication related information of the one wireless device after a connection destination of optical wireless communication connection is switched, and in response to the establishment determination unit having determined that the one wireless device is caused to establish radio communication connection, the wireless device control unit may cause the one wireless device to establish radio communication connection between the one wireless device and the wireless device with which radio communication connection can be established by the one wireless device.

In any of the control apparatuses, the communication related information reception unit may receive the communication related information of the one wireless device which includes allocated bandwidth information representing a bandwidth allocated, after a connection destination of optical wireless communication connection is switched, to communication between the one wireless device and a wireless device serving as the connection destination of optical wireless communication connection of the one wireless device, and when the bandwidth allocated to the communication between the one wireless device and the wireless device serving as the connection destination of optical wireless communication connection of the one wireless device after a connection destination of optical wireless communication connection is switched is narrower than a predetermined bandwidth threshold, the establishment determination unit may determine that the one wireless device is caused to establish radio communication connection. In any of the control apparatuses, the communication related information reception unit may receive the communication related information of the one wireless device which includes received signal strength indicator information representing a received signal strength indicator of a signal received, after a connection destination of optical wireless communication connection is switched, by the one wireless device from a wireless device serving as the connection destination of optical wireless communication connection of the one wireless device, and the establishment determination unit may determine that the one wireless device is caused to establish radio communication connection when the received signal strength indicator of the signal received, by the one wireless device after a connection destination of optical wireless communication connection is switched, from the wireless device serving as the connection destination of optical wireless communication connection of the one wireless device is lower than a predetermined received signal strength indicator threshold. In any of the control apparatuses, the communication related information reception unit may receive the communication related information of the one wireless device which includes delay information representing, after a connection destination of optical wireless communication connection is switched, a delay of communication between the one wireless device and a wireless device serving as the connection destination of optical wireless communication connection of the one wireless device, and the establishment determination unit may determine that the one wireless device is caused to establish radio communication connection when the delay of communication between the one wireless device after a connection destination of optical wireless communication connection is switched and the wireless device serving as the connection destination of optical wireless communication connection of the one wireless device is longer than a predetermined delay threshold. In any of the control apparatuses, the communication related information reception unit may receive the communication related information of the one wireless device which includes jitter information representing a jitter, after a connection destination of optical wireless communication connection is switched, that is a variation in delay per unit time of communication between the one wireless device and a wireless device serving as the connection destination of optical wireless communication connection of the one wireless device, and the establishment determination unit may determine that the one wireless device is caused to establish radio communication connection when the jitter of communication between the one wireless device after a connection destination of optical wireless communication connection is switched and the wireless device serving as the connection destination of optical wireless communication connection of the one wireless device is greater than a predetermined jitter threshold. In any of the control apparatuses, the communication related information reception unit may receive the communication related information of the one wireless device which includes false rate information representing a false rate, after a connection destination of optical wireless communication connection is switched, that is a ratio of false data among data received by the one wireless device from a wireless device serving as the connection destination of optical wireless communication connection of the one wireless device, and the establishment determination unit may determine that the one wireless device is caused to establish radio communication connection when the false rate of data received, by the one wireless device after a connection destination of optical wireless communication connection is switched, from the wireless device serving as the connection destination of optical wireless communication connection of the one wireless device is higher than a predetermined false rate threshold. In any of the control apparatuses, the communication related information reception unit may receive the communication related information of the one wireless device which includes packet loss rate information representing a packet loss rate, after a connection destination of optical wireless communication connection is switched, that is a ratio of lost packets among packets transmitted by the one wireless device to a wireless device serving as the connection destination of optical wireless communication connection of the one wireless device, and the establishment determination unit may determine that the one wireless device is caused to establish radio communication connection when the packet loss rate of packets transmitted by the one wireless device after a connection destination of optical wireless communication connection is switched to the wireless device serving as the connection destination of optical wireless communication connection of the one wireless device is higher than a predetermined packet loss rate threshold.

In any of the control apparatuses, the wireless device with which radio communication connection can be established by the one wireless device may include a plurality of wireless devices, and the connection destination selection unit may further select a connection destination of radio communication connection of the one wireless device from the plurality of wireless devices with which radio communication connection can be established by the one wireless device based on the weather forecast data between the one wireless device and each of the plurality of wireless devices with which radio communication connection can be established by the one wireless device and on the communication related information of each of the plurality of wireless devices with which radio communication connection can be established by the one wireless device, and the wireless device control unit may cause the one wireless device to establish radio communication connection between the one wireless device and a wireless device selected by the connection destination selection unit as the connection destination of radio communication connection of the one wireless device.

In any of the control apparatuses, when the one wireless device to which a plurality of transceivers for establishing optical wireless communication connection are mounted can use the plurality of transceivers for communication with a wireless device selected as the connection destination of optical wireless communication connection of the one wireless device by the connection destination selection unit, the wireless device control unit may cause, by causing the one wireless device to establish optical wireless communication connection between the one wireless device and the wireless device selected as the connection destination of optical wireless communication connection of the one wireless device by using the plurality of transceivers, the one wireless device to switch the connection destination of optical wireless communication connection.

Any of the control apparatuses may further include a learning data storage unit which stores learning data including the weather forecast data between the one wireless device and a wireless device with which the one wireless device establishes optical wireless communication connection among the plurality of wireless devices and received signal strength indicator information representing a received signal strength indicator of a signal received by the one wireless device from the wireless device with which the one wireless device establishes optical wireless communication connection during a forecast period of the weather forecast data, the learning data including a plurality of pieces of learning data, and a model generation unit which generates, by machine learning, an estimation model which estimates a received signal strength indicator of a signal received by the one wireless device from a wireless device with which the one wireless device establishes optical wireless communication connection among the plurality of wireless devices during a forecast period of the weather forecast data, from weather forecast data between the one wireless device and the wireless device with which the one wireless device establishes optical wireless communication connection by using the plurality of pieces of learning data stored in the learning data storage unit as training data, in which the switching determination unit may estimate a received signal strength indicator of a signal received by the one wireless device from the wireless device with which the one wireless device establishes optical wireless communication connection during a forecast period of the weather forecast data, from the weather forecast data between the one wireless device and the wireless device with which the one wireless device establishes optical wireless communication connection by using the estimation model generated by the model generation unit, and determine that the connection destination of optical wireless communication connection of the one wireless device is to be switched when the received signal strength indicator that is estimated is lower than a predetermined received signal strength indicator threshold.

According to an embodiment of the present invention, a program for causing a computer to function as the control apparatus is provided.

According to an embodiment of the present invention, a system is provided. The system may include the control apparatus. The system may include the plurality of wireless devices.

Note that the summary clause does not necessarily describe all necessary features of the embodiments of the present invention. In addition, the present invention may also be a sub-combination of the features described above.

### BRIEF DESCRIPTION OF THE DRAWINGS

Fig. 1 schematically illustrates an example of a system 10.
Fig. 2 schematically illustrates an example of a communication network configured by a plurality of wireless devices.
Fig. 3 schematically illustrates an example of another communication network configured by a plurality of wireless devices.
Fig. 4 is an explanatory diagram for explaining an example in which the control apparatus 100 causes a wireless device to switch a connection destination of optical wireless communication connection.
Fig. 5 is an explanatory diagram for explaining another example in which the control apparatus 100 causes a wireless device to switch a connection destination of optical wireless communication connection.
Fig. 6 is an explanatory diagram for explaining another example in which the control apparatus 100 causes a wireless device to switch a connection destination of optical wireless communication connection.
Fig. 7 schematically illustrates an example of a functional configuration of the control apparatus 100.
Fig. 8 is an explanatory diagram for explaining an example in which the control apparatus 100 determines whether or not a connection destination of optical wireless communication connection of a wireless device is to be switched.
Fig. 9 is an explanatory diagram for explaining an example of a processing flow of the control apparatus 100.
Fig. 10 is an explanatory diagram for explaining another example of the processing flow of the control apparatus 100.
Fig. 11 schematically illustrates an example of a hardware configuration of a computer 1200 that functions as the control apparatus 100.

### DESCRIPTION OF EXEMPLARY EMBODIMENTS

When a wireless transmission line is established between ground stations by using a high frequency electromagnetic wave such as laser light and a millimeter wave, it may be difficult to maintain the wireless transmission line depending on a weather condition. Therefore, to increase a running rate of a wireless transmission network constructed by a plurality of wireless transmission lines, it is required to dynamically avoid bad weather such as rain which negatively affects the wireless transmission network. For example, a system 10 according to the present embodiment adopts a scheme in which weather forecast data is acquired which predicts weather in an area including a wireless transmission network configured by a plurality of wireless stations such that each of a plurality of wireless stations installed on ground has a plurality of optical wireless transmission lines, a priority order is previously set for each candidate transmission path of the wireless transmission network based on the acquired weather forecast data, and a switch to the candidate transmission path with a highest priority order is carried out.

Hereinafter, the present invention will be described through embodiments of the invention, but the following embodiments do not limit the invention according to claims. In addition, not all combinations of features described in the embodiments are essential to a solution of the invention.

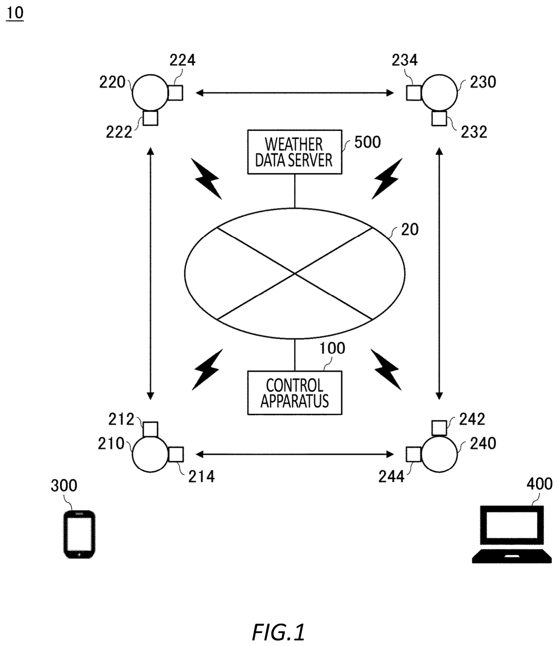

Fig. 1 schematically illustrates an example of the system 10. The system 10 may include a control apparatus 100. The system 10 may include a plurality of wireless devices installed on the ground. In Fig. 1, an example is illustrated in which the system 10 includes four wireless devices including a wireless device 210, a wireless device 220, a wireless device 230, and a wireless device 240. A number of wireless devices included in the system 10 is not limited to four, and another number may be adopted. The system 10 may include a weather data server 500.

The control apparatus 100 controls each of a plurality of wireless devices. For example, the control apparatus 100 controls each of a plurality of wireless devices by transmitting a control signal to each of the plurality of wireless devices via a network 20.

The network 20 may include a core network provided by a communication operator. The core network is compliant with a 5G (5th Generation) communication system, for example. The core network may be compliant with a mobile communication system of a 6G (6th Generation) communication system onwards. The core network may be compliant with a 3G (3rd Generation) communication system. The core network may be compliant with an LTE (Long Term Evolution) communication system. The network 20 may include the Internet. The network 20 may include a wire.

The wireless device forms a wireless communication area and provides a wireless communication service to a communication terminal in the wireless communication area. In Fig. 1, an example is illustrated in which the wireless device 210 provides the wireless communication service to a communication terminal 300, and the wireless device 240 provides the wireless communication service to a communication terminal 400.

For example, the wireless device connects to the network 20 via mobile communication connection. When the wireless device connects to the network 20 via mobile communication connection, in an area where communication infrastructure such as optical fiber is not sufficiently laid, as compared to a case where communication infrastructure is to be newly laid, the wireless devices can be installed at lower costs. The wireless device connects to the network 20 via Internet connection, for example. The wireless device may connect to the network 20 via wired connection.

The control apparatus 100 constructs a communication network configured by a plurality of wireless devices, for example. In Fig. 1, an example of a communication network is illustrated which is configured by the wireless device 210, the wireless device 220, the wireless device 230, and the wireless device 240.

For example, the communication network is constructed in an area where communication infrastructure is not sufficiently laid. For example, the communication network is constructed in an area where a backup communication path of the network 20 is required. The communication network may be constructed in any other areas.

The communication network includes, for example, a mesh network. The communication network may include networks with any other topologies.

The control apparatus 100 constructs the communication network, for example, by causing each of a plurality of wireless devices to establish optical wireless communication connection with a wireless device with which optical wireless communication connection can be established by each of the plurality of wireless devices. For example, the control apparatus 100 causes the wireless device to establish optical wireless communication connection by controlling a transceiver which is mounted to the wireless device and which establishes optical wireless communication connection. The transceiver includes, for example, a laser which outputs an optical signal and a photodetector which detects laser.

The control apparatus 100 controls an orientation of the transceiver, for example. The control apparatus 100 controls the orientation of the transceiver by controlling a gimbal to which the transceiver is mounted, for example. The control apparatus 100 may control the orientation of the transceiver by any other methods.

For example, such that a laser of a transceiver mounted to a wireless device emits an optical signal towards the transceiver mounted to a wireless device with which optical wireless communication connection can be established by the wireless device, the control apparatus 100 controls the orientation of the transceiver mounted to the wireless device. For example, such that a photodetector of a transceiver mounted to a wireless device receives an optical signal emitted from a transceiver mounted to a wireless device with which optical wireless communication connection can be established by the wireless device, the control apparatus 100 controls an orientation of the transceiver mounted to the wireless device.

In Fig. 1, an example is illustrated in which the control apparatus 100 establishes optical wireless communication connection between the wireless device 210 and the wireless device 220 by controlling each of a transceiver 212 of the wireless device 210 and a transceiver 222 of the wireless device 220, establishes optical wireless communication connection between the wireless device 220 and the wireless device 230 by controlling each of a transceiver 224 of the wireless device 220 and a transceiver 234 of the wireless device 230, establishes optical wireless communication connection between the wireless device 230 and the wireless device 240 by controlling each of a transceiver 232 of the wireless device 230 and a transceiver 242 of the wireless device 240, and establishes optical wireless communication connection between the wireless device 240 and the wireless device 210 by controlling each of a transceiver 244 of the wireless device 240 and transceiver 214 of the wireless device 210.

The communication terminal 300 and the communication terminal 400 may be any communication terminals as long as the wireless communication service provided by the wireless device can be used. For example, the communication terminal 300 and the communication terminal 400 are mobile phones such as smartphones, tablet terminals, wearable terminals, and the like. The communication terminal 300 and the communication terminal 400 may be PCs (Personal Computers). The communication terminal 300 and the communication terminal 400 may be loT (Internet of Thing) terminals. The communication terminal 300 and the communication terminal 400 may include any component corresponding to loE (Internet of Everything).

The communication terminal 300 communicates with the communication terminal 400 via a communication network configured by a plurality of wireless devices, for example. In the communication network exemplified in Fig. 1, for example, the communication terminal 300 communicates with the communication terminal 400 via mobile communication connection between the communication terminal 300 and the wireless device 210, optical wireless communication connection between the wireless device 210 and the wireless device 240, and mobile communication connection between the wireless device 240 and the communication terminal 400.

The control apparatus 100 receives communication related information in connection with communication of the wireless device via the network 20 from each of a plurality of wireless devices, for example. The control apparatus 100 regularly receives communication related information of the wireless device from each of a plurality of wireless devices, for example.

The communication related information includes, for example, running rate information representing a running rate that is a ratio of a period during which the wireless device normally runs in a predetermined period. The communication related information includes, for example, available bandwidth information representing a bandwidth available for the wireless device in optical wireless communication. The communication related information includes allocated bandwidth information representing a bandwidth allocated to communication between a wireless device and a wireless device serving as a connection destination of optical wireless communication connection of the wireless device. The communication related information includes, for example, operation rate information representing an operation rate that is a ratio of a period during which the wireless device operates in a predetermined period. The communication related information includes, for example, connection destination information representing a wireless device serving as a connection destination of optical wireless communication connection of the wireless device. The communication related information includes, for example, received signal strength indicator information representing a received signal strength indicator (RSSI) of a signal received by a wireless device from a wireless device serving as a connection destination of optical wireless communication connection of the wireless device. The communication related information includes, for example, delay information representing a delay of communication between a wireless device and a wireless device serving as a connection destination of optical wireless communication connection of the wireless device. The communication related information includes, for example, jitter information representing a jitter that is a variation of a delay per unit time of communication between a wireless device and a wireless device serving as a connection destination of optical wireless communication connection of the wireless device. The communication related information includes, for example, false rate information representing a false rate that is a ratio of false data among data received by a wireless device from a wireless device serving as a connection destination of optical wireless communication connection of the wireless device. The communication related information may include packet loss rate information representing a packet loss rate that is a ratio of lost packets among packets transmitted by a wireless device to a wireless device serving as a connection destination of optical wireless communication connection of the wireless device.

The control apparatus 100 receives, for example, weather data of an area in a predetermined range which includes installation locations of a plurality of wireless devices. The control apparatus 100 receives, for example, weather data of the area via the network 20 from the weather data server 500 which manages weather data.

The weather data includes, for example, rainfall amount data representing a rainfall amount per unit time. The weather data includes, for example, snowfall amount data representing a snowfall amount per unit time. The weather data includes, for example, cloud base altitude data representing a cloud base altitude of a cloud. The weather data includes, for example, visibility range data representing a visibility range. The weather data includes, for example, humidity data representing a humidity. The weather data includes, for example, temperature data representing a temperature. The weather data includes, for example, barometric pressure data representing a barometric pressure. The weather data includes, for example, wind speed data representing a wind speed. The weather data may include wind direction data representing a wind direction.

The control apparatus 100 acquires, for example, weather forecast data which forecasts weather in the area. The control apparatus 100 acquires weather forecast data by forecasting weather in the area based on, for example, weather data received from the weather data server 500.

When the control apparatus 100 is directly coupled to at least one of a plurality of wireless devices configuring the communication network, the control apparatus 100 may transmit a control signal to the wireless device via the communication network instead of the network 20. In the communication network exemplified in Fig. 1, for example, when the control apparatus 100 directly coupled to the wireless device 210 transmits a control signal to the wireless device 230, the control apparatus 100 transmits a control signal to the wireless device 230 via direct communication connection between the control apparatus 100 and the wireless device 210, optical wireless communication connection between the wireless device 210 and the wireless device 220, and optical wireless communication connection between the wireless device 220 and the wireless device 230.

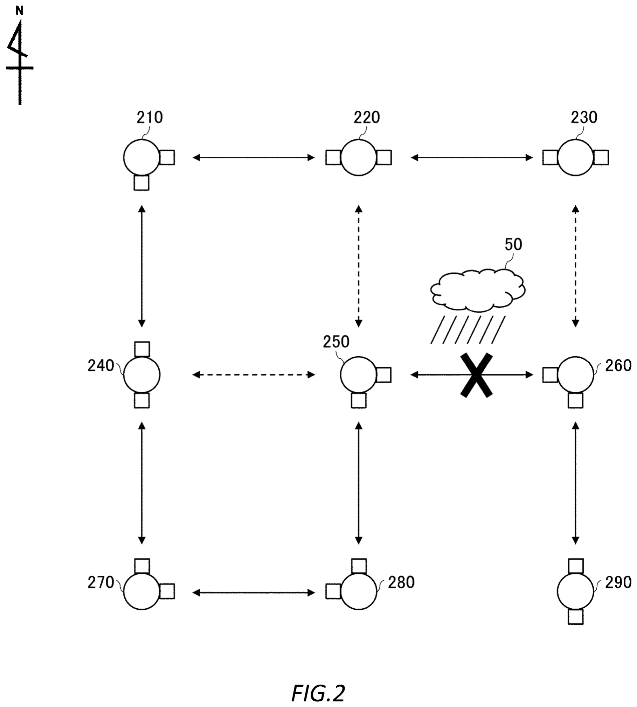

Fig. 2 schematically illustrates an example of a communication network configured by a plurality of wireless devices. As exemplified in Fig. 2, a wireless device 210 to a wireless device 290 each of which has two transceivers mounted thereto may be arranged in a lattice. A lattice interval is, for example, approximately 1 to 10 km.

In the communication network exemplified in Fig. 2, optical wireless communication connection is established between the wireless device 210 and the wireless device 220, between the wireless device 210 and the wireless device 240, between the wireless device 220 and the wireless device 230, between the wireless device 240 and the wireless device 270, between the wireless device 250 and the wireless device 260, between the wireless device 250 and the wireless device 280, between the wireless device 260 and the wireless device 290, and between the wireless device 270 and the wireless device 280.

The control apparatus 100 acquires weather forecast data in an area which includes the communication network exemplified in Fig. 2, for example. The control apparatus 100 determines whether or not a connection destination of optical wireless communication connection of each of the wireless device 210 to the wireless device 290 is to be switched based on the acquired weather forecast data. For example, when weather forecast data represents that weather between wireless devices where optical wireless communication connection is established is weather which negatively affects optical wireless communication, the control apparatus 100 determines that connection destination of optical wireless communication connection of the wireless devices is to be switched. Herein, since weather forecast data represents that a rain cloud 50 negatively affects optical wireless communication connection between the wireless device 250 and the wireless device 260, the description continues where the control apparatus 100 determines that a connection destination of optical wireless communication connection between the wireless device 250 and the wireless device 260 is to be switched.

For example, in response to a determination that optical wireless communication connection between the wireless device 250 and the wireless device 260 is to be switched, the control apparatus 100 selects, from wireless devices with which optical wireless communication connection can be established by the wireless device 250 among the wireless device 210 to the wireless device 290, a connection destination of optical wireless communication connection of the wireless device 250. Herein, the description continues where optical wireless communication connection can be established by the wireless device 250 with the wireless device 220 adjacent to the wireless device 250 in a northerly direction, the wireless device 240 adjacent to the wireless device 250 in a westerly direction, the wireless device 260 adjacent to the wireless device 250 in an easterly direction, and the wireless device 280 to the wireless device 250 in a southerly direction.

The control apparatus 100 selects a connection destination of optical wireless communication connection of the wireless device 250 based on, for example, the weather forecast data and the communication related information of each of the wireless device 220, the wireless device 240, the wireless device 260, and the wireless device 280. The control apparatus 100 selects a connection destination of optical wireless communication connection of the wireless device 250 such that negative impact on optical wireless communication by the rain cloud 50 is avoided, for example. Herein, the description continues where the control apparatus 100 selects the wireless device 220.

As illustrated in Fig. 2, the wireless device 220 establishes optical wireless communication connection with each of the wireless device 210 and the wireless device 230 and already uses two transceivers that are mounted. Therefore, in response to a selection of the wireless device 220 as a connection destination of optical wireless communication connection of the wireless device 250, the control apparatus 100 selects optical wireless communication connection to be disconnected out of optical wireless communication connection between the wireless device 210 and the wireless device 220 and optical wireless communication connection between the wireless device 220 and the wireless device 230. Herein, the description continues where the control apparatus 100 selects optical wireless communication connection between the wireless device 210 and the wireless device 220.

Subsequently, the control apparatus 100 may select a connection destination of optical wireless communication connection of the wireless device 260 from wireless devices with which optical wireless communication connection can be established by the wireless device 260 among the wireless device 210 to the wireless device 290. Herein, the description continues where optical wireless communication connection can be established by the wireless device 260 with the wireless device 230 adjacent to the wireless device 260 in a northerly direction, the wireless device 250 adjacent to the wireless device 260 in a westerly direction, and the wireless device 290 to the wireless device 260 in a southerly direction.

The control apparatus 100 selects a connection destination of optical wireless communication connection of the wireless device 260 based on, for example, the weather forecast data and the communication related information of each of the wireless device 230, the wireless device 250, and the wireless device 290. The control apparatus 100 selects a connection destination of optical wireless communication connection of the wireless device 260 such that negative impact on optical wireless communication by the rain cloud 50 is avoided, for example. Herein, the description continues where the control apparatus 100 selects the wireless device 230.

The control apparatus 100 causes a plurality of wireless devices to switch connection destinations of optical wireless communication connection based on the above-described selection result. Specifically, the configuration is as follows.

The control apparatus 100 causes the wireless device 210 to switch a connection destination of optical wireless communication connection such that a connection destination of optical wireless communication connection of the wireless device 210 is changed from the wireless device 220 and the wireless device 240 to the wireless device 240. The control apparatus 100 causes the wireless device 220 to switch a connection destination of optical wireless communication connection such that a connection destination of optical wireless communication connection of the wireless device 220 is changed from the wireless device 210 and the wireless device 230 to the wireless device 230 and the wireless device 250. The control apparatus 100 causes the wireless device 230 to switch a connection destination of optical wireless communication connection such that a connection destination of optical wireless communication connection of the wireless device 230 is changed from the wireless device 220 to the wireless device 220 and the wireless device 260. The control apparatus 100 causes the wireless device 250 to switch a connection destination of optical wireless communication connection such that a connection destination of optical wireless communication connection of the wireless device 250 is changed from the wireless device 260 and the wireless device 280 to the wireless device 220 and the wireless device 280. The control apparatus 100 causes the wireless device 260 to switch a connection destination of optical wireless communication connection such that a connection destination of optical wireless communication connection of the wireless device 260 is changed from the wireless device 250 and the wireless device 290 to the wireless device 230 and the wireless device 290. With this configuration, the control apparatus 100 reestablishes the communication network exemplified in Fig. 2 such that negative impact on optical wireless communication by the rain cloud 50 is avoided.

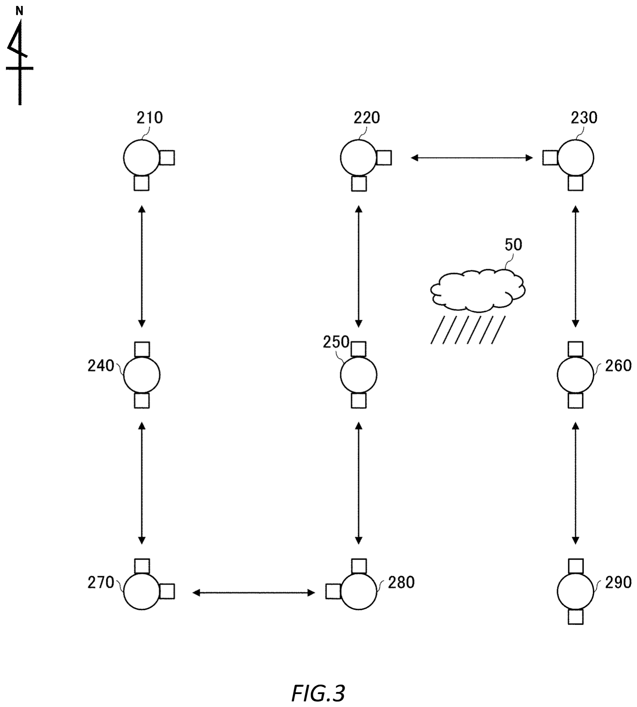

Fig. 3 schematically illustrates another example of the communication network configured by a plurality of wireless devices. The communication network exemplified in Fig. 3 is a communication network after the communication network exemplified in Fig. 2 is reestablished by the control apparatus 100 such that negative impact on optical wireless communication by the rain cloud 50 is avoided.

In the communication network exemplified in Fig. 3, optical wireless communication connection is established between the wireless device 210 and the wireless device 240, between the wireless device 220 and the wireless device 230, between the wireless device 220 and the wireless device 250, between the wireless device 230 and the wireless device 260, between the wireless device 240 and the wireless device 270, between the wireless device 250 and the wireless device 280, between the wireless device 260 and the wireless device 290, and between the wireless device 270 and the wireless device 280.

A communication speed of wireless communication is increased as an electromagnetic wave frequency is a higher frequency. For example, a communication speed of radio communication is about 100 Mbps, and a communication speed of optical wireless communication with a higher frequency than that of radio communication is about 1 Gbps or more. Furthermore, optical wireless communication can be used without a license as being different from radio communication. However, as an overall characteristic, as an electromagnetic wave has a higher frequency, the electromagnetic wave is more likely to experience a negative impact such as scattering and attenuation by water molecules. Therefore, optical wireless communication is more likely to experience the negative impact by water molecules as compared to radio communication. As described above, by using optical wireless communication while dynamically avoiding the negative impact on optical wireless communication due to bad weather such as rain or fog, a running rate of the communication network is desirably improved.

In response to this, in accordance with the system 10 according to the present embodiment, the control apparatus 100 determines, based on weather forecast data in an area which includes a communication network configured by a plurality of wireless devices, whether or not a connection destination of optical wireless communication connection of one wireless device among the plurality of wireless devices is to be switched. In response to a determination that a connection destination of optical wireless communication connection of one wireless device is to be switched, based on weather forecast data and the communication related information of each of a plurality of wireless devices, the control apparatus 100 selects a connection destination of optical wireless communication connection of one wireless device and a connection destination of optical wireless communication connection of another wireless device which requires switching of a connection destination of optical wireless communication connection among the plurality of wireless devices, and causes the plurality of wireless devices to switch connection destinations of optical wireless communication connection. When the weather forecast data represents weather which negatively affects optical wireless communication, since it is possible to cause the wireless device to switch a connection destination of optical wireless communication connection, the system 10 according to the present embodiment can improve a running rate of the communication network by using optical wireless communication while dynamically avoiding a negative impact on optical wireless communication due to bad weather.

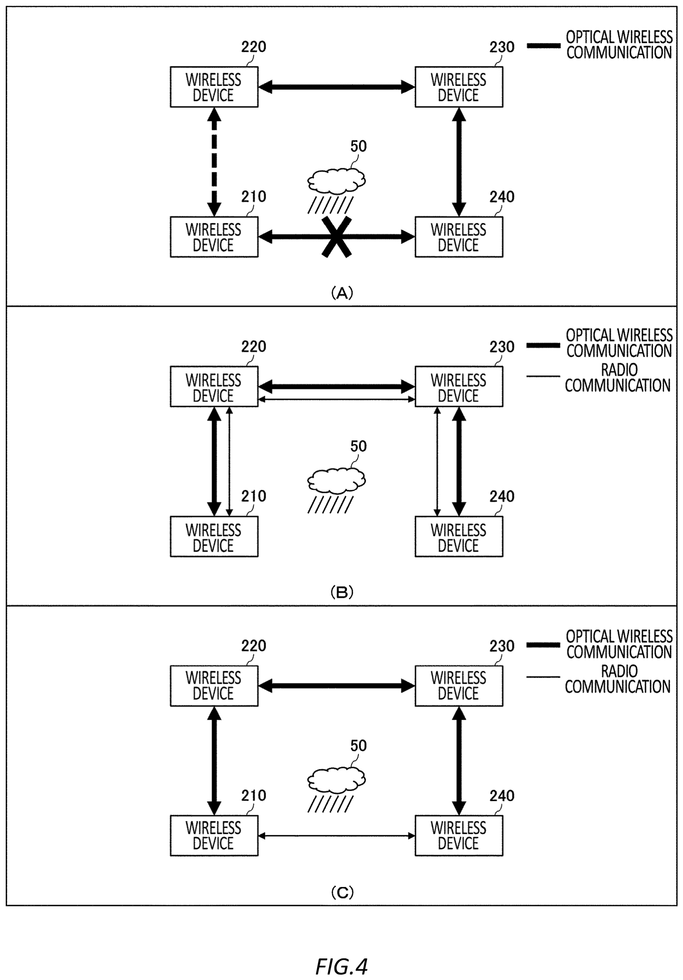

Fig. 4 is an explanatory diagram for explaining an example in which the control apparatus 100 causes a wireless device to switch a connection destination of optical wireless communication connection. The wireless device illustrated in Fig. 4 has mounted thereto an antenna which establishes radio communication in addition to the transceiver.

Here, (A) in Fig. 4 schematically illustrates an example of a communication network configured by the wireless device 210, the wireless device 220, the wireless device 230, and the wireless device 240. In the communication network exemplified in (A) in Fig. 4, optical wireless communication connection is established between the wireless device 210 and the wireless device 240, between the wireless device 220 and the wireless device 230, and between the wireless device 230 and the wireless device 240.

The control apparatus 100 determines whether or not a connection destination of optical wireless communication connection of each of the wireless device 210 to the wireless device 240 is to be switched based on the weather forecast data in the area which includes the communication network exemplified in (A) in Fig. 4, for example. Herein, since weather forecast data represents that the rain cloud 50 negatively affects optical wireless communication connection between the wireless device 210 and the wireless device 240, the description continues where the control apparatus 100 determines that a connection destination of optical wireless communication connection of the wireless device 210 is to be switched from the wireless device 240 to the wireless device 220.

When a connection destination of optical wireless communication connection of the wireless device which configures the communication network is to be switched, for example, the control apparatus 100 adds a communication path of radio communication to the communication network. The radio communication is, for example, millimeter wave communication. The radio communication is, for example, microwave communication. The radio communication may be wireless communication in any other frequency band. For example, the control apparatus 100 decides a communication path of radio communication to be added to the communication network based on the weather forecast data in the area which includes the communication network.

For example, in order to add the decided communication path of radio communication to the communication network, by controlling an antenna mounted to one wireless device among a plurality of wireless devices, the control apparatus 100 causes the one wireless device to establish a radio communication connection. Similarly as in a case where the control apparatus 100 controls the transceiver mounted to the wireless device, the control apparatus 100 may control the antenna mounted to the wireless device.

Here, (B) in Fig. 4 schematically illustrates another example of the communication network configured by the wireless device 210, the wireless device 220, the wireless device 230, and the wireless device 240. The communication network exemplified in (B) in Fig. 4 is a communication network after the communication network exemplified in (A) in Fig. 4 is reestablished by the control apparatus 100 such that negative impact on optical wireless communication by the rain cloud 50 is avoided.

In the communication network exemplified in (B) in Fig. 4, optical wireless communication connection is established between the wireless device 210 and the wireless device 220, between the wireless device 220 and the wireless device 230, and between the wireless device 230 and the wireless device 240. Furthermore, in the communication network exemplified in (B) in Fig. 4, radio communication connection is established between the wireless device 210 and the wireless device 220, between the wireless device 220 and the wireless device 230, and between the wireless device 230 and the wireless device 240.

Here, (C) in Fig. 4 schematically illustrates another example of the communication network configured by the wireless device 210, the wireless device 220, the wireless device 230, and the wireless device 240. The communication network exemplified in (C) in Fig. 4 is a communication network after the communication network exemplified in (A) in Fig. 4 is reestablished by the control apparatus 100 such that negative impact on optical wireless communication by the rain cloud 50 is avoided.

In the communication network exemplified in (C) in Fig. 4, optical wireless communication connection is established between the wireless device 210 and the wireless device 220, between the wireless device 220 and the wireless device 230, and between the wireless device 230 and the wireless device 240. Furthermore, in the communication network exemplified in (C) in Fig. 4, radio communication connection is established between the wireless device 210 and the wireless device 240.

In accordance with the system 10 according to one embodiment illustrated in Fig. 4, when a connection destination of optical wireless communication connection of one wireless device among the plurality of wireless devices configuring the communication network is to be switched, the control apparatus 100 adds a communication path of radio communication to the communication network. As in the communication network exemplified in (B) in Fig. 4, for example, the control apparatus 100 adds a communication path of radio communication that is same as a communication path of optical wireless communication to the communication network. The control apparatus 100 may add a communication path of radio communication different from a communication path of optical wireless communication included in the communication network. In particular, in a frequency band lower than an infrared wavelength range, as compared to optical wireless communication, since it is less likely for radio communication to experience an attenuation effect by water molecules, in a case of bad weather to such an extent that weather negatively affects optical wireless communication but does not negatively affect radio communication, as in the communication network as exemplified in (C) in Fig. 4, the control apparatus 100 may add a communication path of radio communication to an area having bad weather which is avoided for a communication path of optical wireless communication. The system 10 according to one embodiment illustrated in Fig. 4 can further improve the running rate of the communication network by combining optical wireless communication and radio communication.

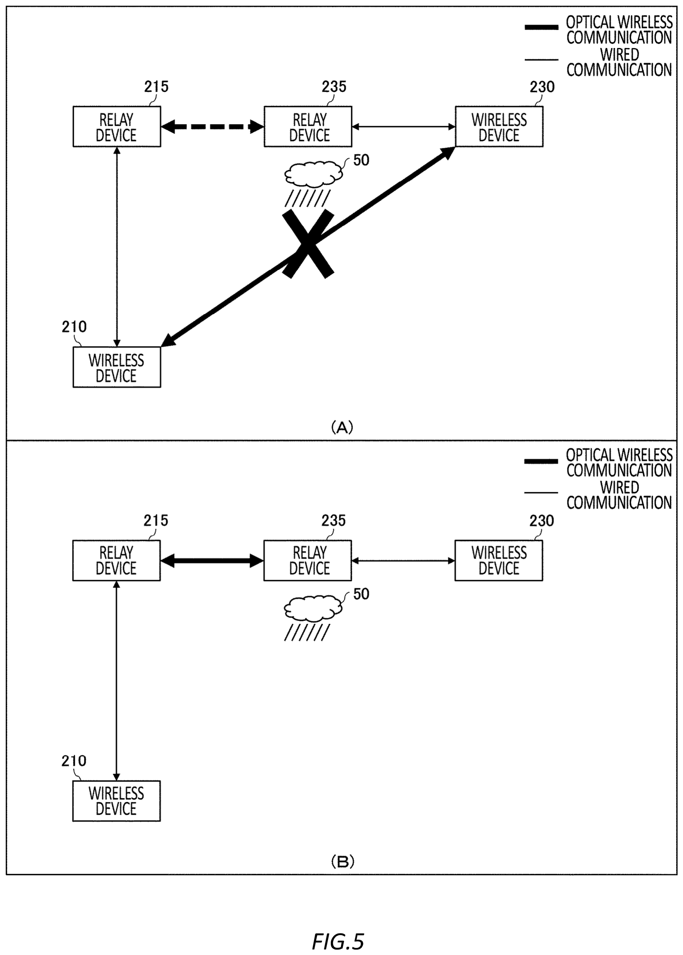

Fig. 5 is an explanatory diagram for explaining another example in which the control apparatus 100 causes a wireless device to switch a connection destination of optical wireless communication connection. The wireless device illustrated in Fig. 5 is connected to a relay device by wire. It is noted that the relay device may have a function similar to that of the wireless device. The relay device may be an example of the wireless device.

Here, (A) in Fig. 5 schematically illustrates an example of optical wireless communication connection between the wireless device 210 and the wireless device 230. The control apparatus 100 determines whether or not optical wireless communication connection between the wireless device 210 and the wireless device 230 is to be switched based on, for example, the weather forecast data between the wireless device 210 and the wireless device 230. Herein, since weather forecast data represents that the rain cloud 50 negatively affects optical wireless communication connection between the wireless device 210 and the wireless device 230, the description continues where the control apparatus 100 determines that a connection destination of optical wireless communication connection between the wireless device 210 and the wireless device 230 is to be switched.

In response to a determination that optical wireless communication connection between the wireless device 210 and the wireless device 230 is to be switched, the control apparatus 100 selects a communication path from the wireless device 210 to the wireless device 230. The control apparatus 100 selects a communication path from the wireless device 210 to the wireless device 230 based on, for example, an installation location of the wireless device 210 and weather forecast data in an area within a predetermined range which includes the installation location of the wireless device 230. Herein, the description continues where the control apparatus 100 selects a communication path via a relay device 215 connected by wire to the wireless device 210 and a relay device 235 connected by wire to the wireless device 230 as the communication path from the wireless device 210 to the wireless device 230.

In response to the control apparatus 100 having selected the communication path via the relay device 215 and the relay device 235 as the communication path from the wireless device 210 to the wireless device 230, the control apparatus 100 controls each of the relay device 215 and the relay device 235 in order to establish optical wireless communication connection between the relay device 215 and the relay device 235. The control apparatus 100 may control the relay devices similarly as in a case where the control apparatus 100 controls wireless devices in order to establish optical wireless communication connection between the wireless devices.

Here, (B) in Fig. 5 schematically illustrates another example of the communication path from the wireless device 210 to the wireless device 230. In (B) in Fig. 5, an example is illustrated of a communication path which connects the wireless device 210 and the wireless device 230 via the relay device 215 and the relay device 235 by way of wired connection between the wireless device 210 and the relay device 215, optical wireless communication connection between the relay device 215 and the relay device 235, and wired connection between the relay device 235 and the wireless device 230. With this configuration, a negative impact by the rain cloud 50 on communication between the wireless device 210 and the wireless device 230 can be avoided.

In accordance with the system 10 according to one embodiment illustrated in Fig. 5, in order to avoid a negative impact by bad weather on communication between wireless devices, the control apparatus 100 switches a communication path between wireless devices via a relay device having wired connection to the wireless device. The system 10 according to one embodiment illustrated in Fig. 5 can further improve the running rate of the communication network by combining optical wireless communication and wired communication.

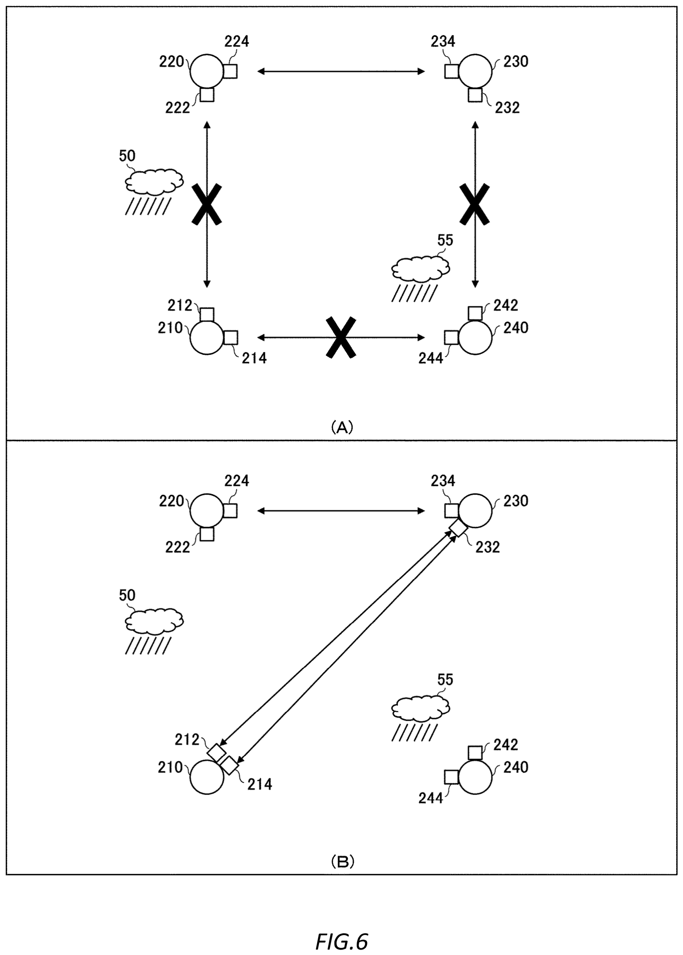

Fig. 6 is an explanatory diagram for explaining another example in which the control apparatus 100 causes a wireless device to switch a connection destination of optical wireless communication connection. Here, (A) in Fig. 6 schematically illustrates another example of the communication network configured by the wireless device 210, the wireless device 220, the wireless device 230, and the wireless device 240. In the communication network exemplified in (A) in Fig. 6, optical wireless communication connection is established between the wireless device 210 and the wireless device 220, between the wireless device 220 and the wireless device 230, between the wireless device 230 and the wireless device 240, and between the wireless device 240 and the wireless device 210.

The control apparatus 100 determines whether or not a connection destination of optical wireless communication connection of each of the wireless device 210 to the wireless device 240 is to be switched based on the weather forecast data in the area which includes the communication network exemplified in (A) in Fig. 6, for example. Herein, the description continues where since the weather forecast data represent that the rain cloud 50 negatively affects optical wireless communication connection between the wireless device 210 and the wireless device 220, and a rain cloud 55 negatively affects optical wireless communication connection between the wireless device 230 and the wireless device 240 and optical wireless communication connection between the wireless device 240 and the wireless device 210, the control apparatus 100 determines that a connection destination of optical wireless communication connection of the wireless device 210 is to be switched from the wireless device 220 and the wireless device 240 to the wireless device 230, a connection destination of optical wireless communication connection of the wireless device 220 is to be switched from the wireless device 210 and the wireless device 230 to the wireless device 230, a connection destination of optical wireless communication connection of the wireless device 230 is to be switched from the wireless device 220 and the wireless device 240 to the wireless device 210 and the wireless device 220, and a connection destination of optical wireless communication connection of the wireless device 230 is to be switched from the wireless device 210 and the wireless device 230 to no connection destination.

Here, (B) in Fig. 6 schematically illustrates another example of the communication network configured by the wireless device 210, the wireless device 220, the wireless device 230, and the wireless device 240. The communication network exemplified in (B) in Fig. 6 is a communication network after the communication network exemplified in (A) in Fig. 6 is reestablished by the control apparatus 100 such that negative impact on optical wireless communication by the rain cloud 50 and the rain cloud 55 is avoided.

As exemplified in (B) in Fig. 6, the control apparatus 100 causes the wireless device 210 to switch, by establishing optical wireless communication connection between the wireless device 210 and the wireless device 230 by using the transceiver 212 and the transceiver 214 which are mounted to the wireless device 210, a connection destination of optical wireless communication connection of the wireless device 210 from the wireless device 220 and the wireless device 240 to the wireless device 230. When a wireless device can use a plurality of transceivers in relation to one optical wireless communication connection, the system 10 according to one embodiment illustrated in Fig. 6 can maximize utilization of communication resource of the wireless device by causing the wireless device to establish one optical wireless communication connection by using a plurality of transceivers.

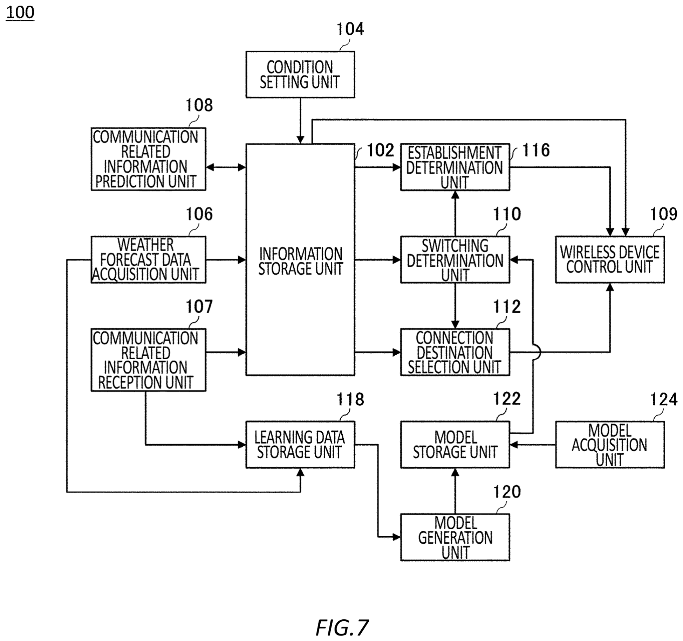

Fig. 7 schematically illustrates an example of a functional configuration of a control apparatus 100. The control apparatus 100 includes an information storage unit 102, a condition setting unit 104, a weather forecast data acquisition unit 106, a communication related information reception unit 107, a communication related information prediction unit 108, a wireless device control unit 109, a switching determination unit 110, a connection destination selection unit 112, an establishment determination unit 116, a learning data storage unit 118, a model generation unit 120, a model storage unit 122, and a model acquisition unit 124. It is noted that it is not imperative for the control apparatus 100 to include all of these configurations.

The information storage unit 102 stores various types of information. The information storage unit 102 stores, for example, installation location information representing an installation location of a wireless device.

The information storage unit 102 stores, for example, performance information representing performance of the wireless device. The performance information includes, for example, MCS information representing an MCS (Modulation and channel Coding Scheme) of the wireless device. The performance information includes, for example, transceiver count information representing a number of transceivers mounted to the wireless device. The number of transceivers is, for example, two. The number of transceivers may be one or may be three or more. The performance information includes, for example, transmitter maximum output power information representing maximum output power of a transmitter. The performance information includes, for example, antenna count information representing a number of antennas mounted to the wireless device. The number of antennas is, for example, two. The number of antennas may be one or may be three or more. The performance information includes, for example, antenna maximum output power information representing maximum output power of an antenna. The performance information may include relay device information representing a relay device connected by wire to a wireless device.

The information storage unit 102 includes, for example, candidate communication path information representing candidate communication paths of a communication network configured by a plurality of wireless devices. The information storage unit 102 includes, for example, a plurality of pieces of candidate communication path information.

The condition setting unit 104 sets various conditions. The condition setting unit 104 may store the set various conditions in the information storage unit 102.

The condition setting unit 104 sets, for example, a switching determination condition that is a condition for determining whether or not a connection destination of optical wireless communication connection of one wireless device among a plurality of wireless devices is to be switched. The switching determination condition includes, for example that the weather forecast data between the one wireless device and a wireless device with which the one wireless device establishes optical wireless communication connection among a plurality of wireless devices meets a bad weather condition.

The bad weather condition includes, for example, that during a forecast period of the weather forecast data, a predicted rainfall amount per unit time between the one wireless device and a wireless device with which optical wireless communication connection is established by the one wireless device is higher than a predetermined rainfall amount threshold. The bad weather condition includes, for example, that during a forecast period of the weather forecast data, a predicted snowfall amount per unit time between the one wireless device and a wireless device with which optical wireless communication connection is established by the one wireless device is higher than a predetermined snowfall amount threshold. The bad weather condition includes, for example, that during a forecast period of the weather forecast data, a cloud base altitude of a cloud generated between the one wireless device and a wireless device with which optical wireless communication connection is established by the one wireless device is lower than a predetermined cloud base altitude threshold.

The bad weather condition includes, for example, that during a forecast period of the weather forecast data, a predicted visibility range between the one wireless device and a wireless device with which optical wireless communication connection is established by the one wireless device is shorter than a predetermined visibility range threshold. The bad weather condition includes, for example, that during a forecast period of the weather forecast data, a predicted humidity between the one wireless device and a wireless device with which optical wireless communication connection is established by the one wireless device is higher than a predetermined humidity threshold. The bad weather condition includes, for example, that during a forecast period of the weather forecast data, a change amount of a predicted temperature between the one wireless device and a wireless device with which optical wireless communication connection is established by the one wireless device is greater than a predetermined temperature change amount threshold.

The bad weather condition includes, for example, that during a forecast period of the weather forecast data, a predicted barometric pressure between the one wireless device and a wireless device with which optical wireless communication connection is established by the one wireless device is lower than a predetermined barometric pressure threshold. The bad weather condition includes, for example, that during a forecast period of the weather forecast data, a predicted wind speed between the one wireless device and a wireless device with which optical wireless communication connection is established by the one wireless device is greater than a predetermined wind speed threshold. The bad weather condition may include that during a forecast period of the weather forecast data, a turbulence is generated between the one wireless device and a wireless device with which optical wireless communication connection is established by the one wireless device.

The switching determination condition includes, for example, that during a prediction period in which a received signal strength indicator of a signal received by the one wireless device from a wireless device serving as a connection destination of optical wireless communication connection of the wireless device is predicted, the received signal strength indicator is lower than a predetermined first received signal strength indicator threshold. The switching determination condition includes, for example, that during a prediction period in which a delay of communication between the one wireless device and a wireless device serving as a connection destination of optical wireless communication connection of the one wireless device is predicted, the delay is longer than a predetermined first delay threshold. The switching determination condition includes, for example, that during a prediction period in which a jitter of communication between the one wireless device and a wireless device serving as a connection destination of optical wireless communication connection of the one wireless device is predicted, the jitter is greater than a predetermined first jitter threshold. The switching determination condition includes, for example, that during a prediction period in which a false rate of data received by the one wireless device from a wireless device serving as a connection destination of optical wireless communication connection of the one wireless device is predicted, the false rate is higher than a predetermined first false rate threshold. The switching determination condition may include that during a prediction period in which a packet loss rate of packets transmitted by the one wireless device to a wireless device serving as a connection destination of optical wireless communication connection of the one wireless device is predicted, the packet loss rate is higher than a predetermined first packet loss rate threshold.

The condition setting unit 104 sets, for example, a first connection destination selection condition that is a condition for selecting a connection destination of optical wireless communication connection of one wireless device among a plurality of wireless devices. The first connection destination selection condition includes, for example, that weather forecast data with one wireless device among a plurality of wireless devices with which optical wireless communication connection can be established by the one wireless device as a connection destination of optical wireless communication connection of one wireless device meets a first good weather condition.

The first good weather condition includes, for example, that during a forecast period of the weather forecast data, a predicted rainfall amount per unit time between the one wireless device and a wireless device with which optical wireless communication connection can be established by the one wireless device is lower than a predetermined rainfall amount threshold. The first good weather condition includes, for example, that during a forecast period of the weather forecast data, a predicted snowfall amount per unit time between the one wireless device and a wireless device with which optical wireless communication connection can be established by the one wireless device is lower than a predetermined snowfall amount threshold. The first good weather condition includes, for example, that during a forecast period of the weather forecast data, a cloud base altitude of a cloud generated between the one wireless device and a wireless device with which optical wireless communication connection can be established by the one wireless device is higher than a predetermined cloud base altitude threshold.

The first good weather condition includes, for example, that during a forecast period of the weather forecast data, a predicted visibility range between the one wireless device and a wireless device with which optical wireless communication connection can be established by the one wireless device is longer than a predetermined visibility range threshold. The first good weather condition includes, for example, that during a forecast period of the weather forecast data, a predicted humidity between the one wireless device and a wireless device with which optical wireless communication connection can be established by the one wireless device is lower than a predetermined humidity threshold. The first good weather condition includes, for example, that during a forecast period of the weather forecast data, a change amount of a predicted temperature between the one wireless device and a wireless device with which optical wireless communication connection can be established by the one wireless device is smaller than a predetermined temperature change amount threshold.

The first good weather condition includes, for example, that during a forecast period of the weather forecast data, a predicted barometric pressure between the one wireless device and a wireless device with which optical wireless communication connection can be established by the one wireless device is higher than a predetermined barometric pressure threshold. The first good weather condition includes, for example, that during a forecast period of the weather forecast data, a predicted wind speed between the one wireless device and a wireless device with which optical wireless communication connection can be established by the one wireless device is smaller than a predetermined wind speed threshold. The first good weather condition may include that during a forecast period of the weather forecast data, a turbulence is not generated between the one wireless device and a wireless device with which optical wireless communication connection can be established by the one wireless device.

When the wireless device in which the weather forecast data meets the first good weather condition includes a plurality of wireless devices, for example, the first connection destination selection condition includes a condition for selecting a connection destination of optical wireless communication connection of the one wireless device from the plurality of wireless devices in which the weather forecast data meets the first good weather condition. For example, the first connection destination selection condition includes selecting a wireless device with a highest running rate among the plurality of wireless devices in which the weather forecast data meets the first good weather condition as a connection destination of optical wireless communication connection of the one wireless device. For example, the first connection destination selection condition includes selecting a wireless device with a widest available bandwidth among the plurality of wireless devices in which the weather forecast data meets the first good weather condition as a connection destination of optical wireless communication connection of the one wireless device. For example, the first connection destination selection condition includes selecting a wireless device with a lowest operation rate among the plurality of wireless devices in which the weather forecast data meets the first good weather condition as a connection destination of optical wireless communication connection of the one wireless device. For example, the first connection destination selection condition includes selecting a wireless device with a highest operation rate among the plurality of wireless devices in which the weather forecast data meets the first good weather condition as a connection destination of optical wireless communication connection of the one wireless device. For example, the first connection destination selection condition includes selecting a wireless device with a highest maximum output power of the transmitter mounted to the wireless device among the plurality of wireless devices in which the weather forecast data meets the first good weather condition as a connection destination of optical wireless communication connection of the one wireless device.

For example, the first connection destination selection condition includes selecting a wireless device by further prioritizing a wireless device having a same MCS as that of the one wireless device among the plurality of wireless devices in which the weather forecast data meets the first good weather condition as a connection destination of optical wireless communication connection of the one wireless device. For example, the first connection destination selection condition includes selecting a wireless device by further prioritizing a wireless device which has a number of established optical wireless communication connections fewer than a number of transceivers mounted thereto among the plurality of wireless devices in which the weather forecast data meets the first good weather condition as a connection destination of optical wireless communication connection of the one wireless device. For example, the first connection destination selection condition may include selecting a wireless device by further prioritizing a relay device of the one wireless device among the plurality of wireless devices in which the weather forecast data meets the first good weather condition as a connection destination of optical wireless communication connection of the one wireless device.

The condition setting unit 104 sets, for example, an establishment determination condition that is a condition for determining whether or not radio communication connection is to be established between one wireless device in which a connection destination of optical wireless communication connection is to be switched among a plurality of wireless devices and a wireless device with which radio communication connection can be established by the one wireless device. It is noted that the wireless device with which radio communication connection can be established by the one wireless device may be the same as or may be different from a wireless device with which optical wireless communication connection can be established by the one wireless device.

The establishment determination condition includes a condition that a bandwidth allocated to communication between the one wireless device after a connection destination of optical wireless communication connection is switched and a wireless device serving as a connection destination of optical wireless communication connection of the one wireless device is narrower than a predetermined first bandwidth threshold. The establishment determination condition includes that a bandwidth allocated to communication between the one wireless device after a connection destination of optical wireless communication connection is switched and a wireless device serving as a connection destination of optical wireless communication connection of the one wireless device is narrower than a predetermined second bandwidth threshold as compared to a bandwidth allocated to communication between the one wireless device before a connection destination of optical wireless communication connection is switched and a wireless device serving as a connection destination of optical wireless communication connection of the one wireless device.

The establishment determination condition includes that a received signal strength indicator of a signal received by the one wireless device after a connection destination of optical wireless communication connection is switched from a wireless device serving as a connection destination of optical wireless communication connection of the one wireless device is lower than a predetermined second received signal strength indicator threshold. The establishment determination condition includes that a received signal strength indicator of a signal received by the one wireless device after a connection destination of optical wireless communication connection is switched from a wireless device serving as a connection destination of optical wireless communication connection of the one wireless device is lower than a predetermined third received signal strength indicator threshold as compared to a received signal strength indicator of a signal received by the one wireless device before a connection destination of optical wireless communication connection is switched from a wireless device serving as a connection destination of optical wireless communication connection of the one wireless device.

The establishment determination condition includes that a delay of communication between the one wireless device after a connection destination of optical wireless communication connection is switched and a wireless device serving as a connection destination of optical wireless communication connection of the one wireless device is longer than a predetermined second delay threshold. The establishment determination condition includes that a delay of communication between the one wireless device after a connection destination of optical wireless communication connection is switched and a wireless device serving as a connection destination of optical wireless communication connection of the one wireless device is longer than a predetermined third delay threshold as compared to a delay of communication between the one wireless device before a connection destination of optical wireless communication connection is switched and a wireless device serving as a connection destination of optical wireless communication connection of the one wireless device.

The establishment determination condition includes that a jitter of communication between the one wireless device after a connection destination of optical wireless communication connection is switched and a wireless device serving as a connection destination of optical wireless communication connection of the one wireless device is greater than a predetermined second jitter threshold. The establishment determination condition includes that a jitter of communication between the one wireless device after a connection destination of optical wireless communication connection is switched and a wireless device serving as a connection destination of optical wireless communication connection of the one wireless device is greater than a predetermined third jitter threshold as compared to a jitter of communication between the one wireless device before a connection destination of optical wireless communication connection is switched and a wireless device serving as a connection destination of optical wireless communication connection of the one wireless device.

The establishment determination condition includes that a false rate of data received by the one wireless device after a connection destination of optical wireless communication connection is switched from a wireless device serving as a connection destination of optical wireless communication connection of the one wireless device is higher than a predetermined second false rate threshold. The establishment determination condition includes that a false rate of data received by the one wireless device after a connection destination of optical wireless communication connection is switched from a wireless device serving as a connection destination of optical wireless communication connection of the one wireless device is higher than a predetermined third false rate threshold as compared to a false rate of data received by the one wireless device before a connection destination of optical wireless communication connection is switched from a wireless device serving as a connection destination of optical wireless communication connection of the one wireless device.

The establishment determination condition includes that a packet loss rate of packets transmitted by the one wireless device after a connection destination of optical wireless communication connection is switched, to a wireless device serving as a connection destination of optical wireless communication connection of the one wireless device is higher than a predetermined second packet loss rate threshold. The establishment determination condition may include that a packet loss rate of packets transmitted by the one wireless device after a connection destination of optical wireless communication connection is switched, to a wireless device serving as a connection destination of optical wireless communication connection of the one wireless device is higher than a predetermined third packet loss rate threshold as compared to a packet loss rate of packets transmitted by the one wireless device before a connection destination of optical wireless communication connection is switched, to a wireless device serving as a connection destination of optical wireless communication connection of the one wireless device.

The condition setting unit 104 sets a second connection destination selection condition that is a condition for selecting a connection destination of radio communication connection of one wireless device among a plurality of wireless devices. The second connection destination selection condition includes, for example, that weather forecast data between the one wireless device among a plurality of wireless devices with which radio communication connection can be established by the one wireless device as a connection destination of radio communication connection of the one wireless device and a wireless device with which radio communication connection can be established by the one wireless device meets a predetermined second good weather condition.

The second good weather condition may be a condition of a same type as the first good weather condition related to various pieces of data included in the weather forecast data. The second good weather condition is a same condition as the first good weather condition, for example. The second good weather condition may be a condition different from the first good weather condition. The second good weather condition is, for example, a looser condition as compared to the first good weather condition.

When the wireless device in which the weather forecast data meets the second good weather condition includes a plurality of wireless devices, for example, the second connection destination selection condition may include a condition for selecting a connection destination of radio communication connection of the one wireless device from the plurality of wireless devices in which the weather forecast data meets the second good weather condition. When the wireless device in which the weather forecast data meets the first good weather condition includes a plurality of wireless devices, for example, the second connection destination selection condition may include a condition similar to a condition for selecting a connection destination of optical wireless communication connection of the one wireless device from the plurality of wireless devices in which the weather forecast data meets the first good weather condition.

The weather forecast data acquisition unit 106 acquires weather forecast data in an area in a predetermined range which includes an installation location of the wireless device indicated by the installation location information of the wireless device which is stored in the information storage unit 102. For example, the weather forecast data acquisition unit 106 may acquire, with regard to each of a plurality of wireless devices, weather forecast data which forecasts weather between one wireless device among the plurality of wireless devices and a wireless device with which optical wireless communication connection can be established by the one wireless device among the plurality of wireless devices. The weather forecast data acquisition unit 106 may store the acquired weather forecast data in the information storage unit 102.

The weather forecast data acquisition unit 106 receives, for example, weather data and acquires weather forecast data by forecasting weather based on the received weather data. The weather forecast data acquisition unit 106 receives weather data from the weather data server 500, for example. The weather forecast data acquisition unit 106 may receive weather data from a weather observation apparatus mounted to the wireless device or a weather observation apparatus installed in a surrounding of the wireless device. The weather observation apparatus includes a precipitation gauge, for example. The weather observation apparatus includes a snowfall gauge, for example. The weather observation apparatus includes a cloud base altimeter, for example. The weather observation apparatus includes a visibility range meter, for example. The weather observation apparatus includes a hygrometer, for example. The weather observation apparatus includes a thermometer, for example. The weather observation apparatus includes a barometer, for example. The weather observation apparatus includes an anemometer, for example. The weather observation apparatus includes a turbulence measurement apparatus, for example. The weather observation apparatus may include an optical camera. The weather forecast data acquisition unit 106 may acquire weather forecast data by receiving the weather forecast data from the weather data server 500.

The communication related information reception unit 107 receives communication related information of a wireless device. The communication related information reception unit 107 receives, for example, communication related information from each of a plurality of wireless devices. The communication related information reception unit 107 may store the received communication related information in the information storage unit 102.

The communication related information reception unit 107 receives, for example, communication related information of one wireless device among a plurality of the wireless devices before a connection destination of optical wireless communication connection of the one wireless device is switched. The communication related information reception unit 107 receives, for example, communication related information of the one wireless device after a connection destination of optical wireless communication connection of the one wireless device is switched.

The communication related information prediction unit 108 predicts communication related information of a wireless device. The communication related information prediction unit 108 predicts, for example, communication related information of each of the plurality of wireless devices. The communication related information prediction unit 108 may store the predicted communication related information of the wireless device in the information storage unit 102.

The communication related information prediction unit 108 predicts, for example, communication related information of one wireless device among a plurality of wireless devices before a communication network configured by a plurality of wireless devices is constructed. The communication related information prediction unit 108 predicts, for example, the communication related information of the one wireless device after the communication network configured by the plurality of wireless devices is constructed.

The communication related information prediction unit 108 predicts, for example, communication related information of the one wireless device before a connection destination of optical wireless communication connection of the one wireless device is switched. The communication related information prediction unit 108 predicts, for example, communication related information of the one wireless device after a connection destination of optical wireless communication connection of the one wireless device is switched.

The communication related information prediction unit 108 predicts the communication related information of the one wireless device based on, for example, the weather forecast data of the one wireless device which is acquired by the weather forecast data acquisition unit 106. The communication related information prediction unit 108 predicts a received signal strength indicator of a signal received by the one wireless device from a wireless device with which optical wireless communication connection is established by the one wireless device based on, for example, the weather forecast data of the one wireless device. The communication related information prediction unit 108 predicts a delay of communication between the one wireless device and a wireless device serving as a connection destination of optical wireless communication connection of the one wireless device based on, for example, the weather forecast data of the one wireless device. The communication related information prediction unit 108 predicts a jitter of communication between the one wireless device and a wireless device serving as a connection destination of optical wireless communication connection of the one wireless device based on, for example, the weather forecast data of the one wireless device. The communication related information prediction unit 108 predicts a false rate of data received by the one wireless device from a wireless device serving as a connection destination of optical wireless communication connection of the one wireless device based on, for example, the weather forecast data of the one wireless device. The communication related information prediction unit 108 may predict a packet loss rate of packets transmitted by the one wireless device to a wireless device serving as a connection destination of optical wireless communication connection of the one wireless device based on, for example, the weather forecast data of the one wireless device.

The communication related information prediction unit 108 may predict communication related information of the one wireless device based on the communication related information of the one wireless device which is received by the communication related information reception unit 107. The communication related information prediction unit 108 predicts a received signal strength indicator of the one wireless device based on, for example, the received signal strength indicator of the one wireless device which is represented by the received signal strength indicator information included in the communication related information of the one wireless device. The communication related information prediction unit 108 predicts a delay of the one wireless device based on, for example, the delay of the one wireless device which is represented by the delay information included in the communication related information of the one wireless device. The communication related information prediction unit 108 predicts a jitter of the one wireless device based on, for example, the jitter of the one wireless device which is represented by the jitter information included in the communication related information of the one wireless device. The communication related information prediction unit 108 predicts a false rate of the one wireless device based on, for example, the false rate of the one wireless device which is represented by the false rate information included in the communication related information of the one wireless device. The communication related information prediction unit 108 may predict a packet loss rate of the one wireless device based on, for example, the packet loss rate of the one wireless device which is represented by the packet loss rate information included in the communication related information of the one wireless device.

The wireless device control unit 109 controls each of a plurality of wireless devices. For example, the wireless device control unit 109 controls each of a plurality of wireless devices by transmitting a control signal to each of the plurality of wireless devices via the network 20.

The control signal includes, for example, a transceiver direction control signal which controls an orientation of the transceiver mounted to the wireless device. The transceiver direction control signal includes, for example, a radiation direction control signal which controls a radiation direction of an optical signal emitted by the laser. The transceiver direction control signal may include a light receiving surface direction control signal which controls a direction of a light receiving surface of a photodetector. The control signal includes, for example, an antenna direction control signal which controls an orientation of the antenna mounted to the wireless device. The antenna direction control signal includes, for example, a radiation direction control signal which controls a radiation direction of a radio signal emitted by an antenna. The antenna direction control signal may include an antenna receiving surface direction control signal which controls a direction of an antenna receiving surface.

In order to construct a communication network configured by a plurality of wireless devices, for example, the wireless device control unit 109 controls each of the plurality of wireless devices. The wireless device control unit 109 controls, for example, each of the plurality of wireless devices in order to construct a communication network in which one candidate communication path among a plurality of candidate communication paths represented by each of a plurality of pieces of candidate communication path information stored in the information storage unit 102 is set as a communication path.

The wireless device control unit 109 selects the one candidate communication path from a plurality of candidate communication paths based on, for example, the weather forecast data acquired by the weather forecast data acquisition unit 106. The wireless device control unit 109 counts a number of at least one weather which meets the bad weather condition stored in the information storage unit 102 among weathers between two wireless devices between which optical wireless communication connection is established with regard to each of a plurality of candidate communication paths based on, for example, the weather forecast data, and selects a candidate communication path with a lowest counted number as the one candidate communication path.

The switching determination unit 110 determines whether or not a connection destination of optical wireless communication connection of one wireless device among a plurality of wireless devices is to be switched. The switching determination unit 110 determines whether or not a connection destination of optical wireless communication connection of the one wireless device is to be switched based on, for example, the weather forecast data acquired by the weather forecast data acquisition unit 106 between the one wireless device and a wireless device with which optical wireless communication connection among a plurality of wireless devices is established by the one wireless device. When the weather forecast data meets the switching determination condition stored in the information storage unit 102, for example, the switching determination unit 110 determines that the connection destination of optical wireless communication connection of the one wireless device is to be switched.

The switching determination unit 110 determines whether or not a connection destination of optical wireless communication connection of the one wireless device is to be switched based on, for example, the communication related information of the one wireless device which is received by the communication related information reception unit 107. When the communication related information of the one wireless device meets the switching determination condition, for example, the switching determination unit 110 determines that the connection destination of optical wireless communication connection of the one wireless device is to be switched.

The switching determination unit 110 may determine whether or not a connection destination of optical wireless communication connection of the one wireless device is to be switched based on the communication related information of the one wireless device which is predicted by the communication related information prediction unit 108. When the communication related information of the one wireless device meets the switching determination condition, for example, the switching determination unit 110 determines that the connection destination of optical wireless communication connection of the one wireless device is to be switched.

In response to the switching determination unit 110 having determined that a connection destination of optical wireless communication connection of one wireless device among a plurality of wireless devices is to be switched, the connection destination selection unit 112 selects a connection destination of optical wireless communication connection of the one wireless device and a connection destination of optical wireless communication connection of another wireless device which requires switching of a connection destination of optical wireless communication connection among a plurality of wireless devices. The connection destination selection unit 112 selects a connection destination of optical wireless communication connection of the one wireless device and a connection destination of optical wireless communication connection of the another wireless device based on, for example, the weather forecast data of each of a plurality of wireless devices which is acquired by the weather forecast data acquisition unit 106. The connection destination selection unit 112 selects a connection destination of optical wireless communication connection of the one wireless device and a connection destination of optical wireless communication connection of the another wireless device based on, for example, the communication related information of each of a plurality of wireless devices which is received by the communication related information reception unit 107. The connection destination selection unit 112 selects a connection destination of optical wireless communication connection of the one wireless device and a connection destination of optical wireless communication connection of the another wireless device based on, for example, the communication related information of each of a plurality of wireless devices which is predicted by the communication related information prediction unit 108. The connection destination selection unit 112 may select a connection destination of optical wireless communication connection of the one wireless device and a connection destination of optical wireless communication connection of the another wireless device based on the performance information of each of the plurality of wireless devices which is stored in the information storage unit 102.

When a connection destination of optical wireless communication connection of the one wireless device is selected, for example, the connection destination selection unit 112 selects a connection destination of optical wireless communication connection of the one wireless device such that a connection destination of optical wireless communication connection of the one wireless device meets the first connection destination selection condition stored in the information storage unit 102. When a connection destination of optical wireless communication connection of the another wireless device is selected, for example, the connection destination selection unit 112 selects a connection destination of optical wireless communication connection of the another wireless device such that a connection destination of optical wireless communication connection of the another wireless device meets the first connection destination selection condition stored in the information storage unit 102.

The wireless device control unit 109 may cause a plurality of wireless devices to switch connection destinations of optical wireless communication connection based on the selection result of the connection destination selection unit 112. For example, when the one wireless device to which a plurality of transceivers are mounted can use the plurality of transceivers for communication with a wireless device selected as the connection destination of optical wireless communication connection of the one wireless device by the connection destination selection unit 112, the wireless device control unit 109 causes, by causing the one wireless device to establish optical wireless communication connection between the one wireless device and the wireless device selected as the connection destination of optical wireless communication connection of the one wireless device by using the plurality of transceivers, the one wireless device to switch the connection destination of optical wireless communication connection.

In response to the switching determination unit 110 having determined that a connection destination of optical wireless communication connection of one wireless device among a plurality of wireless devices is to be switched, the wireless device control unit 109 may cause the one wireless device in which a connection destination of optical wireless communication connection is to be switched to establish radio communication connection between the one wireless device and a wireless device with which radio communication connection can be established among a plurality of wireless devices by the one wireless device. In response to the switching determination unit 110 having determined that a connection destination of optical wireless communication connection of the one wireless device is to be switched, the wireless device control unit 109 may cause another wireless device among a plurality of wireless devices to establish radio communication connection between the another wireless device and a wireless device with which radio communication connection can be established among a plurality of wireless devices by the another wireless device.

The connection destination selection unit 112 selects a connection destination of radio communication connection of the one wireless device from a plurality of wireless devices with which radio communication connection can be established by the one wireless device, for example. The connection destination selection unit 112 selects a connection destination of radio communication connection of the one wireless device based on, for example, the weather forecast data acquired by the weather forecast data acquisition unit 106 between the one wireless device and each of a plurality of wireless devices with which radio communication connection can be established by the one wireless device. The connection destination selection unit 112 selects a connection destination of radio communication connection of the one wireless device based on, for example, the communication related information, which is received by the communication related information reception unit 107, of each of a plurality of wireless devices with which radio communication connection can be established by the one wireless device. The connection destination selection unit 112 selects a connection destination of radio communication connection of the one wireless device based on, for example, the communication related information, which is predicted by the communication related information prediction unit 108, of each of a plurality of wireless devices with which radio communication connection can be established by the one wireless device. The connection destination selection unit 112 may select a connection destination of radio communication connection of the one wireless device based on the performance information, which is stored in the information storage unit 102, of each of a plurality of wireless devices with which radio communication connection can be established by the one wireless device. The connection destination selection unit 112 selects a connection destination of radio communication connection of the one wireless device such that, for example, a connection destination of radio communication connection of the one wireless device meets a second connection destination selection which is stored in the information storage unit 102.

The connection destination selection unit 112 may select a connection destination of radio communication connection of the another wireless device from a plurality of wireless devices with which radio communication connection can be established by the another wireless device. The connection destination selection unit 112 may select a connection destination of radio communication connection of the another wireless device from a plurality of wireless devices with which radio communication connection can be established by the another wireless device similarly as in a case where the connection destination selection unit 112 selects a connection destination of radio communication connection of the one wireless device from a plurality of wireless devices with which radio communication connection can be established by the one wireless device.

The wireless device control unit 109 may cause the one wireless device to establish radio communication connection between the one wireless device and a wireless device selected by the connection destination selection unit 112 as a connection destination of radio communication connection of the one wireless device. The wireless device control unit 109 may cause the another wireless device to establish radio communication connection between the another wireless device and a wireless device selected by the connection destination selection unit 112 as a connection destination of radio communication connection of the another wireless device.

The establishment determination unit 116 determines whether or not one wireless device among a plurality of wireless devices is caused to establish radio communication connection. The establishment determination unit 116 determines whether or not the one wireless device is caused to establish radio communication connection, for example, in response to the switching determination unit 110 having determined that a connection destination of optical wireless communication connection of the one wireless device is to be switched. In response to the establishment determination unit 116 having determined that the one wireless device is caused to establish radio communication connection, the wireless device control unit 109 may cause the one wireless device to establish radio communication connection between the one wireless device and a wireless device with which radio communication connection can be established by the one wireless device.

The establishment determination unit 116 determines whether or not the one wireless device is caused to establish radio communication connection based on, for example, the communication related information of the one wireless device after a connection destination of optical wireless communication connection is switched which is received by the communication related information reception unit 107. The establishment determination unit 116 may determine whether or not the one wireless device is caused to establish radio communication connection based on the communication related information of the one wireless device before a connection destination of optical wireless communication connection is switched which is received by the communication related information reception unit 107. When the communication related information of the one wireless device after a connection destination of optical wireless communication connection is switched meets the establishment determination condition stored in the information storage unit 102, for example, the establishment determination unit 116 determines to cause the one wireless device to establish radio communication connection.

The establishment determination unit 116 determines whether or not the one wireless device is caused to establish radio communication connection based on, for example, the communication related information of the one wireless device after a connection destination of optical wireless communication connection is switched which is predicted by the communication related information prediction unit 108. The establishment determination unit 116 may determine whether or not the one wireless device is caused to establish radio communication connection based on the communication related information of the one wireless device before a connection destination of optical wireless communication connection is switched which is predicted by the communication related information prediction unit 108. The establishment determination unit 116 determines that the one wireless device is caused to establish radio communication connection when, for example, the communication related information of the one wireless device after a connection destination of optical wireless communication connection is switched meets the establishment determination condition.

In a case where a connection destination of optical wireless communication connection of one wireless device among a plurality of wireless devices is switched, the control apparatus 100 does not cause the one wireless device to establish radio communication connection when a communication quality of the one wireless device after switching does not degrade, and causes the one wireless device to establish radio communication connection when the communication quality of the one wireless device after switching degrades. With this configuration, the control apparatus 100 can maintain the communication quality of the communication network even when a connection destination of the wireless device is switched while power consumption as the entire system is reduced.

The learning data storage unit 118 stores learning data. The learning data includes, for example, weather forecast data acquired by the weather forecast data acquisition unit 106 between one wireless device among a plurality of wireless devices and a wireless device among a plurality of wireless devices with which optical wireless communication connection is established by the one wireless device and received signal strength indicator information representing a received signal strength indicator, which is received by the communication related information reception unit 107, of a signal received by the one wireless device from the wireless device with which optical wireless communication connection is established by the one wireless device during a forecast period of the weather forecast data.

The model generation unit 120 generates, by machine learning, an estimation model which estimates a received signal strength indicator of a signal received by one wireless device among a plurality of wireless devices. For example, by using a plurality of pieces of learning data stored in the learning data storage unit 118 as training data, from weather forecast data between the one wireless device and a wireless device with which optical wireless communication connection is established by the one wireless device, the model generation unit 120 generates, by machine learning, an estimation model which estimates a received signal strength indicator of a signal received by the one wireless device from the wireless device with which optical wireless communication connection is established by the one wireless device during a forecast period of the weather forecast data. The model generation unit 120 may store the generated estimation model in the model storage unit 122.

The model acquisition unit 124 acquires an estimation model which estimates a received signal strength indicator of a signal received by one wireless device among a plurality of wireless devices. The model acquisition unit 124 acquires an estimation model similar to the estimation model generated by the model generation unit 120, for example. The model acquisition unit 124 may store the acquired estimation model in the model storage unit 122.

The switching determination unit 110 may determine whether or not a connection destination of optical wireless communication connection of one wireless device among a plurality of wireless devices is to be switched by using the estimation model stored in the model storage unit 122. For example, by using the estimation model, from weather forecast data acquired by the weather forecast data acquisition unit 106 between the one wireless device and a wireless device with which optical wireless communication connection is established by the one wireless device, the weather forecast data acquisition unit 106 estimates a received signal strength indicator of a signal received by the one wireless device from the wireless device with which optical wireless communication connection is established by the one wireless device during a forecast period of the weather forecast data, and when the estimated received signal strength indicator is lower than the first received signal strength indicator threshold, determines that a connection destination of optical wireless communication connection of the one wireless device is to be switched.

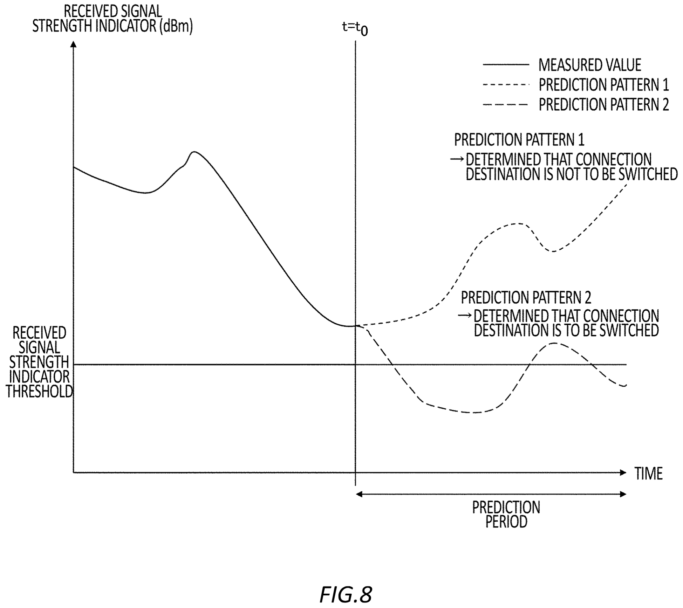

Fig. 8 is an explanatory diagram for explaining an example in which the control apparatus 100 determines whether or not a connection destination of optical wireless communication connection of a wireless device is to be switched. In a graph exemplified in Fig. 8, a horizontal axis represents time, and a vertical axis represents a received signal strength indicator (dBm).

The switching determination unit 110 determines whether or not a connection destination of optical wireless communication connection of the one wireless device is to be switched based on a received signal strength indicator, which is predicted by the communication related information prediction unit 108, of a signal received by one wireless device among a plurality of wireless devices from a wireless device with which optical wireless communication connection is established by the one wireless device. Herein, the description continues where the communication related information prediction unit 108 predicts a received signal strength indicator of the one wireless device during a predetermined forecast period from a time t = t₀ based on the weather forecast data acquired by the weather forecast data acquisition unit 106 between the one wireless device and a wireless device with which optical wireless communication connection is established by the one wireless device.

For example, when the communication related information prediction unit 108 predicts that the received signal strength indicator of the one wireless device is a predicted pattern 1, since the received signal strength indicator of the one wireless device during the prediction period is higher than the received signal strength indicator threshold, the switching determination unit 110 determines that a connection destination of optical wireless communication connection of the one wireless device is not switched. For example, when the communication related information prediction unit 108 predicts that the received signal strength indicator of the one wireless device is a predicted pattern 2, since the received signal strength indicator of the one wireless device during the prediction period is lower than the received signal strength indicator threshold, the switching determination unit 110 determines that a connection destination of optical wireless communication connection of the one wireless device is to be switched.

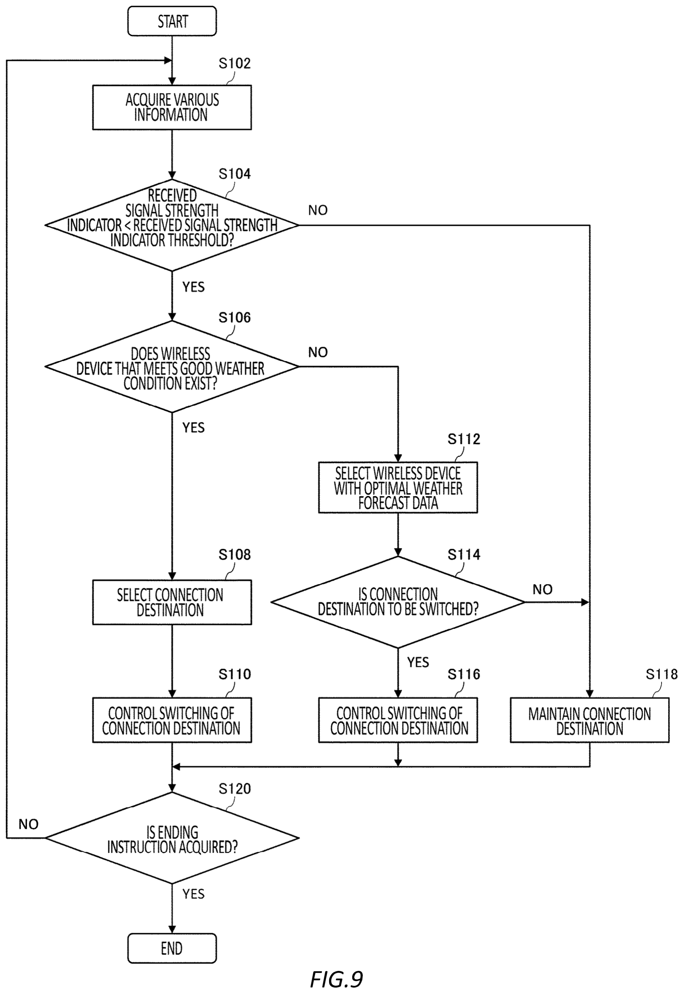

Fig. 9 is an explanatory diagram for explaining an example of a processing flow of the control apparatus 100. Herein, a state in which a communication network configured by a plurality of wireless devices is constructed will be described as a starting state.

In step (step may be abbreviated to be described as S) 102, the control apparatus 100 acquires various types of information of each of a plurality of wireless devices. For example, the weather forecast data acquisition unit 106 acquires weather forecast data which forecasts weather between one wireless device among the plurality of wireless devices and a wireless device with which optical wireless communication connection can be established by the one wireless device among the plurality of wireless devices. For example, the communication related information prediction unit 108 predicts a received signal strength indicator of a signal received by the one wireless device from a wireless device with which optical wireless communication connection is established by the one wireless device based on the weather forecast data acquired by the weather forecast data acquisition unit 106.

In S104, the switching determination unit 110 determines whether or not a received signal strength indicator of the one wireless device during a prediction period in which the received signal strength indicator of the one wireless device is predicted by the communication related information prediction unit 108 in S102 is lower than the received signal strength indicator threshold stored in the information storage unit 102. When the switching determination unit 110 determines that the received signal strength indicator of the one wireless device during the prediction period is lower than the received signal strength indicator threshold, the flow proceeds to S106. When the switching determination unit 110 determines that the received signal strength indicator of the one wireless device during the prediction period is higher than the received signal strength indicator threshold, the flow proceeds to S118.

In S106, the connection destination selection unit 112 determines whether or not a wireless device exists in which the weather forecast data acquired by the weather forecast data acquisition unit 106 in S102 meets the good weather condition stored in the information storage unit 102 and with which optical wireless communication connection can be established by the one wireless device. When the connection destination selection unit 112 determines that a wireless device with which optical wireless communication connection can be established by the one wireless device that meets the good weather condition exists, the flow proceeds to S108. When the connection destination selection unit 112 determines that a wireless device with which optical wireless communication connection can be established by the one wireless device that meets the good weather condition does not exist, the flow proceeds to S112.

In S108, the connection destination selection unit 112 selects a connection destination of optical wireless communication connection of the one wireless device from wireless devices in which it is determined in S106 that the good weather condition is met and with which optical wireless communication connection can be established by the one wireless device. In response to a selection of the connection destination of optical wireless communication connection of the one wireless device, the connection destination selection unit 112 selects a connection destination of optical wireless communication connection of another wireless device which requires switching of a connection destination of optical wireless communication connection among a plurality of wireless devices. In S110, the wireless device control unit 109 causes a plurality of wireless devices to switch connection destinations of optical wireless communication connection based on the selection result selected in S108 by the connection destination selection unit 112.

In S112, the connection destination selection unit 112 selects a wireless device with optimal weather forecast data acquired in S102 by the weather forecast data acquisition unit 106 among wireless devices with which optical wireless communication connection can be established by the one wireless device. In S114, the switching determination unit 110 determines whether or not a connection destination of optical wireless communication connection of the one wireless device is to be switched based on the selection result selected in S112 by the connection destination selection unit 112. When, for example, the connection destination selection unit 112 selects a wireless device with which optical wireless communication connection is not established by the one wireless device in S112, the switching determination unit 110 determines that a connection destination of optical wireless communication connection of the one wireless device is to be switched. When, for example, the connection destination selection unit 112 selects a wireless device with which optical wireless communication connection is established by the one wireless device in S112, the switching determination unit 110 determines that a connection destination of optical wireless communication connection of the one wireless device is not switched. When the switching determination unit 110 determines that a connection destination of optical wireless communication connection of the one wireless device is to be switched, the flow proceeds to S116. In this case, in response to switching of a connection destination of optical wireless communication connection of the one wireless device, the connection destination selection unit 112 selects a connection destination of optical wireless communication connection of another wireless device which requires switching of a connection destination of optical wireless communication connection among a plurality of wireless devices. When the switching determination unit 110 determines that a connection destination of optical wireless communication connection of the one wireless device is not switched, the flow proceeds to S118.

In S116, the wireless device control unit 109 causes a plurality of wireless devices to switch connection destinations of optical wireless communication connection based on the selection result selected in S112 and S114 by the connection destination selection unit 112. In S118, the wireless device control unit 109 causes a plurality of wireless devices to maintain connection destinations of optical wireless communication connection.

In S120, the control apparatus 100 determines whether or not an ending instruction is acquired. When the control apparatus 100 determines that the ending instruction is not acquired, the flow returns to S102. When the control apparatus 100 determines that the ending instruction is acquired, the processing of the control apparatus 100 is ended.

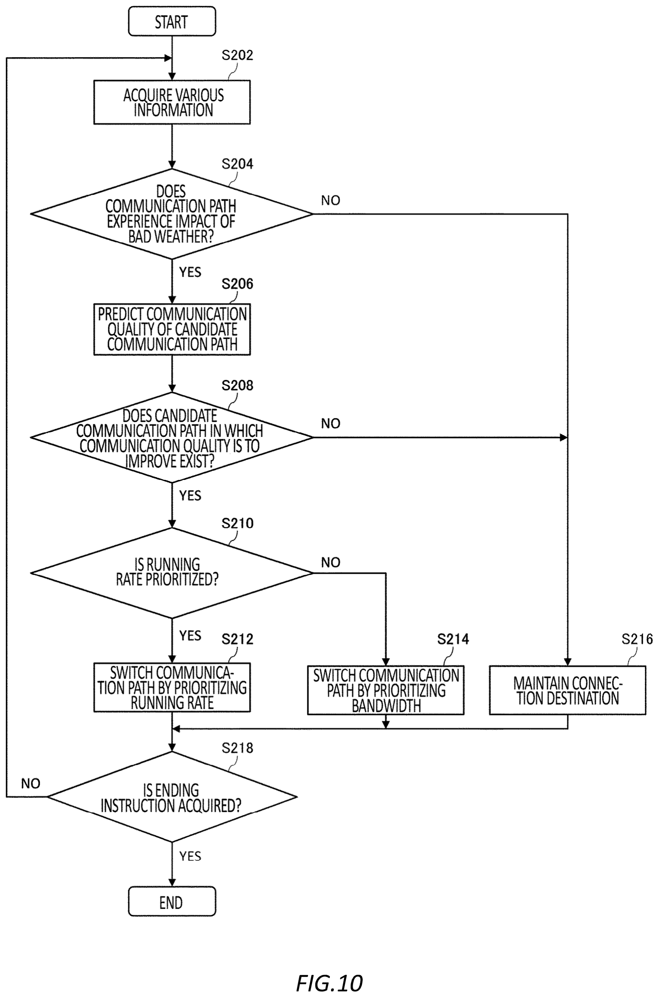

Fig. 10 is an explanatory diagram for explaining another example of the processing flow of the control apparatus 100. Herein, a state in which a communication network configured by a plurality of wireless devices is constructed will be described as a starting state.

In S202, the control apparatus 100 acquires various types of information. For example, the weather forecast data acquisition unit 106 acquires weather forecast data which forecasts weather in an area that includes installation locations of a plurality of wireless devices. For example, the communication related information reception unit 107 receives running rate information of a wireless device from each of the plurality of wireless devices. For example, the communication related information reception unit 107 receives available bandwidth information from each of the plurality of wireless devices.

For example, the communication related information prediction unit 108 predicts a communication quality of a communication path of the communication network. The communication related information prediction unit 108 predicts the communication quality of the communication path by predicting, for example, an average running rate of the communication path based on a running rate of each of a plurality of wireless devices represented by the running rate information of each of the plurality of wireless devices which is received by the communication related information reception unit 107. The communication related information prediction unit 108 may predict the communication quality of the communication path by predicting an average available bandwidth of the communication path based on an available bandwidth of each of the plurality of wireless devices which is represented by the available bandwidth information of each of the plurality of wireless devices which is received by the communication related information reception unit 107.

In S204, the switching determination unit 110 determines whether or not a communication path experiences an impact of bad weather based on the weather forecast data acquired in S202 by the weather forecast data acquisition unit 106. For example, when two wireless devices exist in which weather between the wireless devices among a plurality of wireless devices meets the bad weather condition stored in the information storage unit 102 and with which optical wireless communication connection is established, the switching determination unit 110 determines that the communication path experiences the impact of bad weather. When the switching determination unit 110 determines that the communication path experiences the impact of bad weather, the flow proceeds to S206. When the switching determination unit 110 determines that the communication path does not experience the impact of bad weather, the flow proceeds to S216.

In S206, the communication related information prediction unit 108 predicts a communication quality of a candidate communication path indicated by the candidate communication path information stored in the information storage unit 102. The communication related information prediction unit 108 predicts a communication quality of a candidate communication path by predicting, for example, an average running rate of the candidate communication path when a communication path is switched to the candidate communication path based on a running rate of each of a plurality of wireless devices which is represented by the running rate information of each of the plurality of wireless devices which is received in S202 by the communication related information reception unit 107. The communication related information prediction unit 108 may predict a communication quality of a candidate communication path by predicting an average available bandwidth of the candidate communication path upon switching to the candidate communication path based on an available bandwidth of each of a plurality of wireless devices which is represented by the available bandwidth information of each of the plurality of wireless devices which is received in S202 by the communication related information reception unit 107.

In S208, the switching determination unit 110 determines whether or not a candidate communication path exists in which a communication quality is to improve when the communication path is switched to a candidate communication path. When, for example, the communication quality of the candidate communication path predicted in S206 by the communication related information prediction unit 108 is higher than the communication quality of the communication path predicted in S202 by the communication related information prediction unit 108, the switching determination unit 110 determines that the candidate communication path in which the communication quality is to improve exists. When the switching determination unit 110 determines that the candidate communication path exists in which the communication quality is to improve, the flow proceeds to S210. When the switching determination unit 110 determines that the candidate communication path does not exist in which the communication quality is to improve, the flow proceeds to S216.

In S210, the connection destination selection unit 112 determines whether or not a communication path is to be selected from candidate communication paths determined in S208 by the switching determination unit 110 in which the communication quality is to improve by prioritizing the running rate of the wireless device. When it is determined that the communication path is to be selected by prioritizing the running rate of the wireless device, the flow proceeds to S212. When it is determined that the communication path is not selected by prioritizing the running rate of the wireless device, the flow proceeds to S214.

In S212, the connection destination selection unit 112 selects, as a communication path, a candidate communication path with a highest average running rate among the candidate communication paths determined in S208 by the switching determination unit 110 in which the communication quality is to improve. The wireless device control unit 109 causes a plurality of wireless devices to switch communication paths to the candidate communication path with the highest average running rate.

In S214, the connection destination selection unit 112 selects, as a communication path, a candidate communication path with a widest average available bandwidth among the candidate communication paths determined in S208 by the switching determination unit 110 in which the communication quality is to improve. The wireless device control unit 109 causes a plurality of wireless devices to switch communication paths to the candidate communication path with the widest average available bandwidth.

In S216, the wireless device control unit 109 causes the plurality of wireless devices to maintain the communication paths. In S218, the control apparatus 100 determines whether or not an ending instruction is acquired. When the control apparatus 100 determines that the ending instruction is not acquired, the flow returns to S202. When the control apparatus 100 determines that the ending instruction is acquired, the processing of the control apparatus 100 is ended.

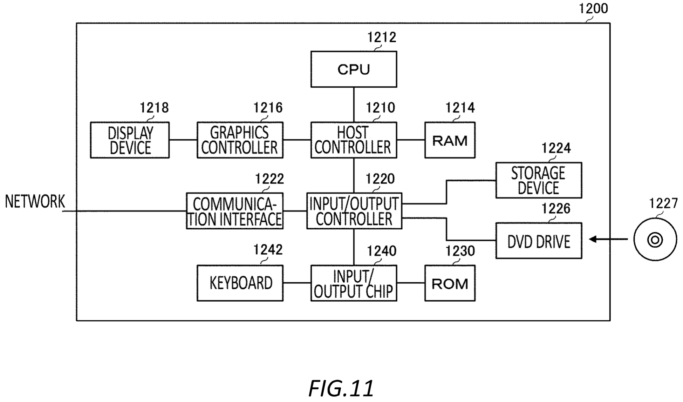

Fig. 11 schematically illustrates an example of a hardware configuration of a computer 1200 that functions as the control apparatus 100. Programs installed in the computer 1200 can cause the computer 1200 to function as one or more "units" of the apparatus according to the embodiment described above or can cause the computer 1200 to execute operations associated with the apparatuses according to the embodiment described above or the one or more "units", and/or can cause the computer 1200 to execute a process according to the embodiment described above or stages of the process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage device 1224, a DVD drive 1226 and an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 also includes legacy input/output units such as a ROM 1230 and a keyboard 1242, which are connected to the input/output controller 1220 through an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive 1226 reads the programs or the data from the DVD-ROM 1227 or the like, and provides the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer readable storage medium such as a DVD-ROM 1227 or an IC card. The program is read from the computer readable storage medium, installed into the storage device 1224, RAM 1214, or ROM 1230, which are also examples of a computer readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM 1227, or the IC card, and transmits the read transmission data to a network or writes reception data received from a network to a reception buffer region or the like provided on the recording medium.

In addition, the CPU 1212 may cause all or a necessary portion of a file or a database, which has been stored in an external recording medium such as the storage device 1224, the DVD drive 1226 (DVD-ROM 1227), the IC card and the like, to be read into the RAM 1214, thereby executing various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the said plurality of entries, and read the attribute value of the second attribute stored in the said entry, thereby acquiring the attribute value of the second attribute associated with the first attribute that satisfies a predetermined condition.

The programs or software module described above may be stored on the computer 1200 or in a computer readable storage medium near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent stages of processes in which operations are executed or "units" of apparatuses responsible for executing operations. A specific step and "unit" may be implemented by a dedicated circuit, a programmable circuit supplied along with a computer readable instruction stored on a computer readable storage medium, and/or a processor supplied along with the computer readable instruction stored on the computer readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer readable storage medium may include any tangible device capable of storing an instruction executed by an appropriate device, so that the computer readable storage medium having the instruction stored thereon constitutes a product including an instruction that may be executed in order to provide means for executing an operation designated by a flowchart or a block diagram. Examples of the computer readable storage medium may include an electronic storage medium, a magnetic storage medium, an optical storage medium, an electromagnetic storage medium, a semiconductor storage medium, and the like. A more specific example of the computer readable storage medium may include a floppy disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code described in any combination of one or more programming languages including an object-oriented programming language such as Smalltalk (registered trademark), JAVA (registered trademark), and C++, or the like, and a conventional procedural programming language such as a "C" programming language or a similar programming language.

The computer readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer readable instruction to generate means for executing operations designated by the flowchart or the block diagram. Examples of the processor include a computer processor, a processing unit, a microprocessor, a digital signal processor, a controller, a microcontroller, and the like.

While the present invention has been described above by way of the embodiments, the technical scope of the present invention is not limited to the scope described in the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process executed by a device, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

10: system; 20: network; 50: rain cloud; 55: rain cloud; 100: control apparatus; 102: information storage unit; 104: condition setting unit; 106: weather forecast data acquisition unit; 107: communication related information reception unit; 108: communication related information prediction unit; 109: wireless device control unit; 110: switching determination unit; 112: connection destination selection unit; 116: establishment determination unit; 118: learning data storage unit; 120: model generation unit; 122: model storage unit; 124: model acquisition unit; 210: wireless device; 212: transceiver; 214: transceiver; 215: relay device; 220: wireless device; 222: transceiver; 224: transceiver; 230: wireless device; 232: transceiver; 234: transceiver; 235: relay device; 240: wireless device; 242: transceiver; 244: transceiver; 250: wireless device; 260: wireless device; 270: wireless device; 280: wireless device; 290: wireless device; 300: communication terminal; 400: communication terminal; 500: weather data server; 1200: computer; 1210: host controller; 1212: CPU; 1214: RAM; 1216: graphics controller; 1218: display device; 1220: input/output controller; 1222: communication interface; 1224: storage device; 1226: DVD drive; 1227: DVD-ROM; 1230: ROM; 1240: input/output chip; 1242: keyboard.

## Claims

1. A control apparatus comprising:
a weather forecast data acquisition unit which acquires, with regard to each of a plurality of wireless devices installed on a ground, weather forecast data which forecasts weather between one wireless device among the plurality of wireless devices and a wireless device with which optical wireless communication connection can be established by the one wireless device among the plurality of wireless devices;
a communication related information reception unit which receives communication related information in connection with communication of a wireless device from each of the plurality of wireless devices;
a switching determination unit which determines, based on the weather forecast data between the one wireless device and a wireless device with which the one wireless device establishes optical wireless communication connection among the plurality of wireless devices, whether or not a connection destination of optical wireless communication connection of the one wireless device is to be switched;
a connection destination selection unit which selects, in response to the switching determination unit having determined that the connection destination of optical wireless communication connection of the one wireless device is to be switched, based on the weather forecast data and the communication related information of each of the plurality of wireless devices, a connection destination of optical wireless communication connection of the one wireless device and a connection destination of optical wireless communication connection of another wireless device which requires switching of a connection destination of optical wireless communication connection among the plurality of wireless devices; and
a wireless device control unit which causes, based on a selection result of the connection destination selection unit, the plurality of wireless devices to switch a connection destination of optical wireless communication connection.

2. The control apparatus according to claim 1, wherein
the wireless device with which optical wireless communication connection can be established by the one wireless device includes a plurality of wireless devices, and
the connection destination selection unit selects, as the connection destination of optical wireless communication connection of the one wireless device, a wireless device in which the weather forecast data between the wireless device and the one wireless device meets a predetermined good weather condition among the plurality of wireless devices with which optical wireless communication connection can be established by the one wireless device.

3. The control apparatus according to claim 2, wherein
the communication related information reception unit receives the communication related information including running rate information representing a running rate that is a ratio of a period during which a wireless device normally runs in a predetermined period, and
when the wireless device in which the weather forecast data meets the good weather condition includes a plurality of wireless devices, the connection destination selection unit selects, as the connection destination of optical wireless communication connection of the one wireless device, a wireless device in which the running rate is highest among the plurality of wireless devices in which the weather forecast data meets the good weather condition.

4. The control apparatus according to claim 2, wherein the communication related information reception unit receives the communication related information including available bandwidth information which represents a bandwidth available for a wireless device in optical wireless communication, and
when the wireless device in which the weather forecast data meets the good weather condition includes a plurality of wireless devices, the connection destination selection unit selects, as the connection destination of optical wireless communication connection of the one wireless device, a wireless device with a widest bandwidth available among the plurality of wireless devices in which the weather forecast data meets the good weather condition.

5. The control apparatus according to any one of claims 1 to 4, wherein the wireless device control unit causes the one wireless device, a connection destination of optical wireless communication connection of which is to be switched, to establish radio communication connection between the one wireless device and a wireless device with which radio communication connection can be established by the one wireless device among the plurality of wireless devices.

6. The control apparatus according to claim 5, wherein
the communication related information reception unit further receives the communication related information of the one wireless device after a connection destination of optical wireless communication connection is switched,
the control apparatus further comprises an establishment determination unit which determines whether or not the one wireless device is caused to establish radio communication connection based on the communication related information of the one wireless device after a connection destination of optical wireless communication connection is switched, and
in response to the establishment determination unit having determined that the one wireless device is caused to establish radio communication connection, the wireless device control unit causes the one wireless device to establish radio communication connection between the one wireless device and the wireless device with which radio communication connection can be established by the one wireless device.

7. The control apparatus according to claim 6, wherein
the communication related information reception unit receives the communication related information of the one wireless device which includes allocated bandwidth information representing a bandwidth allocated, after a connection destination of optical wireless communication connection is switched, to communication between the one wireless device and a wireless device serving as the connection destination of optical wireless communication connection of the one wireless device, and
when the bandwidth allocated to the communication between the one wireless device and the wireless device serving as the connection destination of optical wireless communication connection of the one wireless device after a connection destination of optical wireless communication connection is switched is narrower than a predetermined bandwidth threshold, the establishment determination unit determines that the one wireless device is caused to establish radio communication connection.

8. The control apparatus according to claim 5, wherein
the wireless device with which radio communication connection can be established by the one wireless device includes a plurality of wireless devices,
the connection destination selection unit further selects a connection destination of radio communication connection of the one wireless device from the plurality of wireless devices with which radio communication connection can be established by the one wireless device based on the weather forecast data between the one wireless device and each of the plurality of wireless devices with which radio communication connection can be established by the one wireless device and on the communication related information of each of the plurality of wireless devices with which radio communication connection can be established by the one wireless device, and
the wireless device control unit causes the one wireless device to establish radio communication connection between the one wireless device and a wireless device selected by the connection destination selection unit as the connection destination of radio communication connection of the one wireless device.

9. The control apparatus according to any one of claims 1 to 4, wherein
when the one wireless device to which a plurality of transceivers for establishing optical wireless communication connection are mounted can use the plurality of transceivers for communication with a wireless device selected as the connection destination of optical wireless communication connection of the one wireless device by the connection destination selection unit, the wireless device control unit causes, by causing the one wireless device to establish optical wireless communication connection between the one wireless device and the wireless device selected as the connection destination of optical wireless communication connection of the one wireless device by using the plurality of transceivers, the one wireless device to switch the connection destination of optical wireless communication connection.

10. The control apparatus according to any one of claims 1 to 4, further comprising:
a learning data storage unit which stores learning data including the weather forecast data between the one wireless device and a wireless device with which the one wireless device establishes optical wireless communication connection among the plurality of wireless devices and received signal strength indicator information representing a received signal strength indicator of a signal received by the one wireless device from the wireless device with which the one wireless device establishes optical wireless communication connection during a forecast period of the weather forecast data, the learning data including a plurality of pieces of learning data; and
a model generation unit which generates, by machine learning, an estimation model which estimates a received signal strength indicator of a signal received by the one wireless device from a wireless device with which the one wireless device establishes optical wireless communication connection among the plurality of wireless devices during a forecast period of the weather forecast data, from weather forecast data between the one wireless device and the wireless device with which the one wireless device establishes optical wireless communication connection by using the plurality of pieces of learning data stored in the learning data storage unit as training data, wherein
the switching determination unit estimates a received signal strength indicator of a signal received by the one wireless device from the wireless device with which the one wireless device establishes optical wireless communication connection during a forecast period of the weather forecast data, from the weather forecast data between the one wireless device and the wireless device with which the one wireless device establishes optical wireless communication connection by using the estimation model generated by the model generation unit, and determines that the connection destination of optical wireless communication connection of the one wireless device is to be switched when the received signal strength indicator that is estimated is lower than a predetermined received signal strength indicator threshold.

11. A program for causing a computer to function as the control apparatus according to any one of claims 1 to 4.

12. A system comprising the control apparatus according to any one of claims 1 to 4 and the plurality of wireless devices.
